# EUROPEAN PATENT APPLICATION

(11) **EP 4 848 680 A1**
(43) Date of publication of application: **02.12.2026**
(21) Application number: 25747585.5
(22) Date of filing: 18.01.2025
(51) Int. Cl.: H04L 27/34

(54) **INFORMATION PROCESSING METHOD AND RELATED APPARATUS**

(30) Priority: 31.01.2024 CN 202410144217
(71) Applicant: Huawei Technologies Co., Ltd., Shenzhen, Guangdong 518129 (CN)
(72) Inventor: JIN, Yu, Shenzhen, Guangdong 518129 (CN); CHEN, Hongzhi, Shenzhen, Guangdong 518129 (CN); CHAI, Xiaomeng, Shenzhen, Guangdong 518129 (CN); SUN, Yan, Shenzhen, Guangdong 518129 (CN); JIN, Huangping, Shenzhen, Guangdong 518129 (CN)
(74) Representative: Huawei European IPR
(86) International application number: PCT/CN2025/073157
(87) International publication number: WO 2025/162013

(57) **Abstract**

An information processing method and a related apparatus are provided. In the method, a first device sends first information to a second device, where the first information indicates constellation information of a first constellation and/or first channel environment information related to the first constellation; and the first device receives second information from the second device, where the second information indicates that a second constellation is a constellation updated based on the first information. The first constellation is, in the first device, a mapping relationship between a bit and a modulation symbol that is determined by using a first artificial intelligence model, and the second constellation is, in the second device, a mapping relationship between an equalized signal or a received signal and soft bit information that is determined by using a second artificial intelligence model.

## Description

This application claims priority to Chinese Patent Application No. 202410144217.3, filed with the China National Intellectual Property Administration on January 31, 2024 and entitled "INFORMATION PROCESSING METHOD AND RELATED APPARATUS", which is incorporated herein by reference in its entirety.

### TECHNICAL FIELD

This application relates to the field of communication technologies, and in particular, to an information processing method and a related apparatus.

### BACKGROUND

In a communication system, a network side device may determine a modulation scheme based on a signal to interference plus noise ratio (signal to interference plus noise ratio, SINR), and indicate the modulation scheme to a terminal device by using downlink control information, so that in uplink and downlink transmission, data sent by a transmit end by using the modulation scheme can be successfully demodulated by a receive end to obtain correct information bits.

To improve a modulation gain, an artificial intelligence (artificial intelligence, AI)-based training solution may be further used to design a constellation modulation solution. In an AI-based constellation modulation design manner, the transmit end and the receive end can perform joint training, that is, train both neural networks to design the constellation modulation solution. However, to ensure that the networks at both ends can operate simultaneously and converge at an air interface, a parameter of an AI model, for example, a gradient or other information, is transmitted. However, because the transmitted information is generally compressed information, which incur a compression loss and the like, constellation inconsistency may occur between the receive end and the transmit end, resulting in a limitation on a gain.

### SUMMARY

This application provides an information processing method and a related apparatus, to enable modulation constellations at a receive end and a transmit end to be consistent, so as to improve a demodulation gain.

According to a first aspect, this application provides an information processing method. The method may be applied to a first device, a chip or a chip module in the first device, or a module or a unit that can implement all or a part of functions of the first device. The following uses the first device as an example for description. In the method, the first device sends first information to a second device, where the first information indicates constellation information of a first constellation and/or first channel environment information related to the first constellation; and the first device receives second information from the second device, where the second information indicates that a second constellation is a constellation updated based on the first information.

The first constellation is, in the first device, a mapping relationship between a bit and a modulation symbol that is determined by using a first artificial intelligence model, and the second constellation is, in the second device, a mapping relationship between an equalized signal or a received signal and soft bit information that is determined by using a second artificial intelligence model. In other words, the first constellation is a constellation used by the first device to perform modulation, the second constellation is a constellation used by the second device to perform corresponding demodulation, and both the first constellation and the second constellation are constellations designed by using an artificial intelligence model. A constellation (or referred to as a constellation set) is all modulation symbols in a modulation scheme and a mapping relationship between each modulation symbol and m bits in the modulation scheme, where m is an order of the modulation scheme. The second information is response information or acknowledgment information for the first information, or acknowledgment information indicating that the second constellation has been updated.

It can be learned that, in the method, the first device may send, to the second device by using the first information, constellation information of a constellation used for modulation and/or related channel environment information. In this way, the second device can update, based on the first information, a constellation used for demodulation, so that constellations at a receive end and a transmit end are consistent, to improve a demodulation gain.

Optionally, the first device may also be referred to as a data transmit device or a data transmit apparatus, and is referred to as a transmit device or a transmit apparatus for short. Correspondingly, the second device may also be referred to as a data receive device or a data receive apparatus, and is referred to as a receive device or a receive apparatus for short. For downlink transmission, the first device may be, for example, a network device or a module or a unit configured to implement all or a part of functions of the network device. Correspondingly, the second device may be, for example, a terminal device or a module or a unit configured to implement all or a part of functions of the terminal device. For uplink transmission, the first device may be, for example, a terminal device or a module or a unit configured to implement all or a part of functions of the terminal device, and the second device may be, for example, a network device or a module or a unit configured to implement all or a part of functions of the network device.

In an optional implementation, the first artificial intelligence model corresponds to a constellation modulation mapper that outputs a modulation symbol for an input bit and the input first channel environment information; and the second artificial intelligence model corresponds to a constellation modulation demapper that outputs soft bit information for an input equalized signal or received signal and input second channel environment information related to the second constellation. The first channel environment information is obtained by the first device through measurement, and the second channel environment information is obtained by the second device through measurement. In other words, in this implementation, the constellation modulation mapper uses an artificial intelligence model whose input is the bit and the first channel environment information, and output is the modulation symbol. The constellation modulation demapper also uses an artificial intelligence model whose input is the received signal or the equalized signal, and output is the soft bit information. It can be learned that, in this implementation, the artificial intelligence model can design, based on different channel environment information, a modulation scheme that best matches a current environment. In addition, in a communication system, because time-frequency resources and measurement periodicities used for measuring the first channel environment information and the second channel environment information are different, an error between the first channel environment information and the second channel environment information is large, and neural network models of the receive end and the transmit end cannot enable constellations that change in real time to be consistent. In this application, constellations at the receive end and the transmit end may be consistent by using the first information, to improve a demodulation gain.

Optionally, the constellation information of the first constellation includes constellation update time of the first constellation, and further includes at least one of the following: one or more modulation symbols of the first constellation; a variation of a modulation symbol of the first constellation relative to a modulation symbol of a third constellation, where the third constellation is, in the first device, a mapping relationship between a bit and a modulation symbol that is most recently updated before the update time of the first constellation; or all modulation symbols output by the constellation modulation mapper corresponding to the first artificial intelligence model.

Optionally, for the downlink transmission, the first channel environment information includes measurement time of an uplink channel, and further includes at least one of a channel measurement result or channel delay spread information of the uplink channel. Correspondingly, the second channel environment information includes measurement time of a downlink channel, and further includes at least one of a channel measurement result or channel delay spread information of the downlink channel. For the uplink transmission, the first channel environment information includes measurement time of a downlink channel, and further includes at least one of a channel measurement result or channel delay spread information of the downlink channel. Correspondingly, the second channel environment information includes measurement time of a downlink channel, and further includes at least one of a channel measurement result or channel delay spread information of the downlink channel.

In an optional implementation, that the first device sends the first information to the second device includes: The first device determines to indicate the second device to update the second constellation; and the first device sends the first information to the second device. It can be learned that, in this implementation, the first device can trigger the second device to update the second constellation, and initiate a constellation synchronization mechanism, that is, the information processing method in this application. For example, for the downlink transmission, if a network device updates channel environment information of an uplink channel by using a sounding reference signal, a terminal device may be triggered to update a constellation. For another example, for the uplink transmission, if a terminal device updates channel environment information of a downlink channel by using a channel state information reference signal, a network device may be triggered to update a constellation.

Optionally, the constellation information of the first constellation further includes constellation update time, and the constellation update time may be time after time at which the first device receives the second information. In this way, after receiving the second information, the first device may update the first constellation at the constellation update time of the first constellation.

In an optional implementation, the first device receives third information from the second device, where the third information indicates constellation information of the second constellation and/or the second channel environment information related to the second constellation; and when determining, based on the third information, not to update the first constellation, the first device performs the step of sending the first information to the second device. Optionally, when determining, based on the third information, to update the first constellation, the first device updates the first constellation based on the third information, and sends fourth information to the second device, where the fourth information indicates that the first constellation is a constellation updated based on the third information. Optionally, the fourth information is notification information used to notify that the first constellation has been updated, or response information or acknowledgment information of the third information.

Optionally, that the first device determines, based on the third information, to update or not to update the first constellation includes: The first device compares constellation update time and/or channel measurement time of the second constellation in the third information with the constellation update time and/or channel measurement time of the first constellation; and if the constellation update time and/or the channel measurement time of the second constellation are/is later than the constellation update time and/or the channel measurement time of the first constellation, the first device determines not to update the first constellation; or if the constellation update time and/or the channel measurement time of the second constellation are/is earlier than the constellation update time and/or the channel measurement time of the first constellation, the first device determines to update the first constellation.

It can be learned that, in this implementation, the second device reports constellation information or channel environment information of the second device, to trigger a constellation synchronization mechanism (which may also be referred to as a constellation error correction mechanism). If the first device does not need to update a constellation, the first device sends the first information to the second device, the second device updates a constellation, and the first device receives the second information, to learn that the constellation of the second device has been updated. If the first device needs to update the constellation, the first device may update the constellation based on the third information, and send the fourth information to the second device.

In another optional implementation, the first device receives third information from the second device. The third information is used to request transmission of information related to the first constellation, for example, the constellation information of the first constellation and/or the first channel environment information related to the first constellation that are/is indicated by the first information. Optionally, the third information includes a decoding check error and a moment corresponding to the decoding check error. It can be learned that, in this implementation, when a decoding check error occurs, the second device may request the first device to send the information related to the first constellation, so that the second device updates the second constellation, to increase a demodulation gain.

Optionally, the constellation information of the second constellation includes constellation update time of the second constellation, and further includes at least one of the following: one or more modulation symbols of the second constellation; a variation of a modulation symbol of the second constellation relative to a modulation symbol of a fourth constellation, where the fourth constellation is, in the second device, a mapping relationship between the equalized signal or the received signal and the soft bit information that is most recently updated before the update time of the second constellation; or all modulation symbols of the constellation modulation demapper corresponding to the second artificial intelligence model. All the modulation symbols of the constellation modulation demapper are all modulation symbols of a constellation (that is, the second constellation) used by the constellation modulation demapper for demapping.

According to a second aspect, this application provides an information processing method. The method may be applied to a second device, a chip or a chip module in the second device, or a module or a unit that can implement all or a part of functions of the second device. For descriptions of the second device, refer to related content in the first aspect. Details are not described herein again. The following uses the second device as an example for description. In the method, the second device receives first information from a first device, where the first information indicates constellation information of a first constellation and/or first channel environment information related to the first constellation, and the first constellation is, in the first device, a mapping relationship between a bit and a modulation symbol that is determined by using a first artificial intelligence model; and the second device sends second information to the first device, where the second information indicates that a second constellation is a constellation updated based on the first information, and the second constellation is, in the second device, a mapping relationship between an equalized signal or a received signal and soft bit information that is determined by using a second artificial intelligence model.

For related descriptions of the first constellation, the second constellation, a constellation, and the like, refer to related content in the first aspect. Details are not described herein again. Optionally, for descriptions of the first artificial intelligence model and the second artificial intelligence model, refer to related content in the first aspect. Details are not described herein again.

It can be learned that, in the method, the second device can receive information related to the first constellation in the first device, for example, the constellation information and/or the channel environment information, to update the second constellation based on the information related to the first constellation, so that constellations at a receive end and a transmit end are consistent, to improve a demodulation gain.

According to a third aspect, this application provides an information processing method. The method may be applied to a second device, a chip or a chip module in the second device, or a module or a unit that can implement all or a part of functions of the second device. For descriptions of the second device, refer to related content in the first aspect. Details are not described herein again. The following uses the second device as an example for description. In the method, the second device updates a second constellation based on second channel environment information by using a second artificial intelligence model; and the second device sends third information to a first device, where the third information indicates constellation information and/or the second channel environment information of the second constellation.

It can be learned that, in the method, the second device may send information related to an updated second constellation to the first device in time, so that constellations at a receive end and a transmit end are consistent in time, to improve a demodulation gain.

In an optional implementation, the second device receives fourth information from the first device, where the fourth information indicates that the first constellation is a constellation updated based on the third information, and the first constellation is, in the first device, a mapping relationship between a bit and a modulation symbol that is determined by using a first artificial intelligence model. Optionally, the fourth information is notification information used to notify that the first constellation has been updated, or response information or acknowledgment information of the third information. It can be learned that, in this implementation, after the second device sends the information related to the second constellation, if the first device updates the first constellation by using the third information, the first device may return the fourth information to the second device, to notify the second device that the first constellation has been updated.

In another optional implementation, the second device receives first information from the first device, where the first information indicates constellation information of a first constellation and/or first channel environment information related to the first constellation, and the first constellation is, in the first device, a mapping relationship between a bit and a modulation symbol that is determined by using a first artificial intelligence model; and the second device updates a second constellation based on the first information, and sends second information to the first device, where the second information indicates that the second constellation is a constellation updated based on the first information. Optionally, the second information is response information or acknowledgment information for the first information, or acknowledgment information indicating that the second constellation has been updated. It can be learned that, in this implementation, after the second device sends the information related to the second constellation, if the first device determines, based on the information related to the second constellation, that the first constellation does not need to be updated, the first device may further send information related to the first constellation to the second device, so that the second device updates the second constellation based on the information related to the first constellation.

For related descriptions of the first constellation, the second constellation, a constellation, and the like, refer to related content in the first aspect. Details are not described herein again. Optionally, for descriptions of the first artificial intelligence model and the second artificial intelligence model, refer to related content in the first aspect. Details are not described herein again.

According to a fourth aspect, this application further provides an information processing method. The method may be applied to a first device, a chip or a chip module in the first device, or a module or unit that can implement all or a part of functions of the first device. The following uses the first device as an example for description. In the method, the first device receives fifth information from a second device, where the fifth information indicates constellation information of at least two candidate constellations; the first device selects a target constellation from the at least two candidate constellations based on at least two scheduled second devices and channel correlation between channels of the second devices; and the first device sends sixth information to the second device, where the sixth information indicates constellation information of the target constellation. In a case, the at least two candidate constellations each are a mapping relationship between a bit and a modulation symbol that is generated by the second device by using an artificial intelligence model, and the target constellation is a constellation used by the second device to perform modulation. Optionally, the artificial intelligence model corresponds to a constellation modulation mapper whose input is a bit and output is a modulation symbol, or corresponds to a constellation modulation mapper whose input is the bit and channel environment information and output is the modulation symbol.

In another case, the at least two candidate constellations each are a mapping relationship between an equalized signal or a received signal and soft bit information that is generated by the second device by using an artificial intelligence model, and the target constellation is a constellation used by the second device to perform corresponding demodulation. Optionally, the artificial intelligence model corresponds to a constellation modulation demapper that outputs soft bit information for an input equalized signal or received signal, or the artificial intelligence model corresponds to a constellation modulation demapper that outputs the soft bit information for the input equalized signal or received signal and input second channel environment information related to a second constellation.

It can be learned that, in the method, the first device selects a constellation for the second device based on a scheduled device and channel correlation, so that network performance can be improved.

Optionally, in the at least two second devices scheduled by the first device, each second device determines at least two candidate constellations by using the foregoing implementation, and sends constellation information of the at least two candidate constellations of the second device to the first device. Correspondingly, the first device may select a target constellation from the at least two candidate constellations for the second device. Optionally, the second device that sends the fifth information is one of the at least two second devices. In this case, for the at least two candidate constellations of the second device, the first device may select the target constellation for the second device based on channel correlation between a channel of the second device and a channel of another second device. In this way, interference between channels is considered for a constellation used by each second device, so that network performance can be improved.

According to a fifth aspect, this application further provides an information processing method. The method may be applied to a second device, a chip or a chip module in the second device, or a module or unit that can implement all or a part of functions of the second device. The following uses the second device as an example for description. In the method, the second device sends fifth information to a first device, where the fifth information indicates constellation information of at least two candidate constellations; and the second device receives sixth information, where the sixth information indicates constellation information of a target constellation, and the target constellation is a candidate constellation selected from a plurality of candidate constellations.

In a case, the at least two candidate constellations each are a mapping relationship between a bit and a modulation symbol that is generated by the second device by using an artificial intelligence model, and the target constellation is a constellation used by the second device to perform modulation. Optionally, the artificial intelligence model corresponds to a constellation modulation mapper whose input is a bit and output is a modulation symbol, or corresponds to a constellation modulation mapper whose input is the bit and channel environment information and output is the modulation symbol.

In another case, the at least two candidate constellations each are a mapping relationship between an equalized signal or a received signal and soft bit information that is generated by the second device by using an artificial intelligence model, and the target constellation is a constellation used by the second device to perform corresponding demodulation. Optionally, the artificial intelligence model corresponds to a constellation modulation demapper that outputs soft bit information for an input equalized signal or received signal, or the artificial intelligence model corresponds to a constellation modulation demapper that outputs the soft bit information for the input equalized signal or received signal and input second channel environment information related to a second constellation.

It can be learned that, in the method, the first device may select a constellation for the second device, so that the target constellation is selected based on at least two second devices scheduled by the first device and channel correlation between channels of the at least two second devices, to facilitate improvement of network performance.

According to a sixth aspect, an embodiment of this application further provides a communication apparatus. The communication apparatus is a first device, an apparatus of the first device, or an apparatus that can be used in a matching manner with the first device. In a possible implementation, the communication apparatus includes a functional module, and the functional module is a hardware circuit, software, or a combination of a hardware circuit and software.

In a possible implementation, the communication apparatus includes one or more functional units, for example, a communication unit. The communication unit is configured to send first information to a second device, where the first information indicates constellation information of a first constellation and/or first channel environment information related to the first constellation. The first device receives second information from the second device, where the second information indicates that a second constellation is a constellation updated based on the first information.

Optionally, for a possible implementation of the communication apparatus, refer to related descriptions of the first aspect. Details are not described herein again.

In another possible implementation, in the communication apparatus, the communication unit is configured to receive fifth information from a second device, where the fifth information indicates constellation information of at least two candidate constellations. The first device selects a target constellation from the at least two candidate constellations based on at least two scheduled second devices and channel correlation between channels of the second devices. The first device sends sixth information to the second device, where the sixth information indicates constellation information of the target constellation.

Optionally, for a possible implementation of the communication apparatus, refer to related descriptions of the fourth aspect. Details are not described herein again.

According to a seventh aspect, an embodiment of this application further provides a communication apparatus. The communication apparatus is a second device, an apparatus of the second device, or an apparatus that can be used in a matching manner with the second device. In a possible implementation, the communication apparatus includes a functional module, and the functional module is a hardware circuit, software, or a combination of a hardware circuit and software.

In a possible implementation, the communication apparatus includes one or more functional units, such as a communication unit and a processing unit. The communication unit is configured to receive first information from a first device, where the first information indicates constellation information of a first constellation and/or first channel environment information related to the first constellation, and the first constellation is, in the first device, a mapping relationship between a bit and a modulation symbol that is determined by using a first artificial intelligence model. The communication unit is further configured to send second information to the first device, where the second information indicates that a second constellation is a constellation updated based on the first information, and the second constellation is, in the second device, a mapping relationship between an equalized signal or a received signal and soft bit information that is determined by using a second artificial intelligence model.

Optionally, for a possible implementation of the communication apparatus, refer to related descriptions of the second aspect. Details are not described herein again.

In another possible implementation, in the communication apparatus, the processing unit is configured to update the second constellation based on second channel environment information by using the second artificial intelligence model. The communication unit is configured to send third information to the first device, where the third information indicates constellation information and/or the second channel environment information of the second constellation.

Optionally, for a possible implementation of the communication apparatus, refer to related descriptions of the third aspect. Details are not described herein again.

In still another possible implementation, in the communication apparatus, the communication unit is configured to send fifth information to the first device, where the fifth information indicates constellation information of at least two candidate constellations. The communication unit is further configured to receive sixth information, where the sixth information indicates constellation information of a target constellation, and the target constellation is a candidate constellation selected from a plurality of candidate constellations.

Optionally, for a possible implementation of the communication apparatus, refer to related descriptions of the fifth aspect. Details are not described herein again.

For the sixth aspect and the seventh aspect, in an example, the processing unit may be a processing unit, or may be represented as a processing circuit or a logic circuit. The communication unit may be an input/output interface, an interface circuit, an output circuit, an input circuit, a pin, a related circuit, or the like on the chip or a chip system.

In an implementation process, the processor may be configured to perform, for example, but not limited to, baseband-related processing; and the transceiver or the communication interface may be configured to perform, for example, but not limited to, radio frequency receiving and sending. The foregoing components may be separately disposed on chips that are independent of each other, or at least some or all of the components may be disposed on a same chip. For example, the processor may be further divided into an analog baseband processor and a digital baseband processor. The analog baseband processor and the transceiver (or the communication interface) may be integrated on a same chip, and the digital baseband processor may be disposed on an independent chip. With continuous development of an integrated circuit technology, increasingly more components may be integrated on a same chip. For example, the digital baseband processor and a plurality of application processors (for example, but not limited to, a graphics processing unit and a multimedia processor) may be integrated on a same chip. The chip may be referred to as a system on a chip (System on a Chip, SoC). Whether the components are independently disposed on different chips or integrated and disposed on one or more chips usually depends on a requirement of a product design. This embodiment of this application imposes no limitation on specific implementations of the foregoing components.

According to an eighth aspect, this application provides a communication apparatus. The communication apparatus may include a processing circuit and a transceiver circuit, and the processing circuit is connected to the transceiver circuit. The transceiver circuit is configured to exchange (or transmit/receive, or input/output) information or data. The processing circuit is configured to run program instructions, so that the communication apparatus performs the method according to any one of the first aspect, the second aspect, the third aspect, the fourth aspect, or the fifth aspect, or the possible implementations of the aspects. The transceiver circuit may be a communication interface, an input/output interface, or a transceiver. The transceiver may be a radio frequency module in the communication apparatus, or may be a combination of the radio frequency module and an antenna. The transceiver circuit may be an input/output interface of a chip or a circuit.

According to a ninth aspect, this application provides a communication apparatus. The communication apparatus includes a processor, configured to perform the method according to any one of the first aspect, the second aspect, the third aspect, the fourth aspect, the fifth aspect, or the possible implementations of the aspects. Alternatively, the processor is configured to execute a program stored in a memory. When the program is executed, the method described in any one of the first aspect, the second aspect, the third aspect, the fourth aspect, the fifth aspect, or the possible implementations of the aspects is performed.

In a possible implementation, the memory is located outside the communication apparatus.

In a possible implementation, the memory is located inside the communication apparatus.

In a possible implementation, the processor and the memory may alternatively be integrated into one component. In other words, the processor and the memory may alternatively be integrated together. For example, the communication apparatus may be a chip or a chip system.

In a possible implementation, the communication apparatus further includes a transceiver. The transceiver is configured to receive or send first information. For example, the transceiver may be further configured to receive or send a reference signal. For example, the communication apparatus may be a terminal device or a network device.

According to a tenth aspect, this application provides a readable storage medium. The readable storage medium stores program instructions. When the program instructions are run on a computer, the computer is caused to perform the method described in any one of the first aspect, the second aspect, the third aspect, the fourth aspect, the fifth aspect, or the possible implementations of the aspects.

According to an eleventh aspect, this application provides a program product including program instructions. When the program instructions are run, the method described in any one of the first aspect, the second aspect, the third aspect, the fourth aspect, the fifth aspect, or the possible implementations of the aspects is performed.

According to a twelfth aspect, this application provides an apparatus. The apparatus may be implemented in a form of a chip, or may be in a form of a device. The apparatus includes a processing circuit. The processing circuit is configured to read and execute a program stored in a memory, to perform the communication method provided in any one or more of the first aspect, the second aspect, the third aspect, the fourth aspect, the fifth aspect, or the possible implementations of the aspects. Optionally, the apparatus further includes the memory, and the memory is connected to the processing circuit via a circuit. Further, optionally, the apparatus further includes a communication interface, and the processing circuit is connected to the communication interface. The communication interface is configured to receive to-be-processed information. The processing circuit obtains the information from the communication interface, processes the information, and outputs a processing result through the communication interface. The communication interface may be an input/output interface.

Optionally, the processing circuit and the memory may be physically independent units, or the memory may be integrated with the processing circuit.

According to a thirteenth aspect, this application provides a communication system. The communication system includes a first communication apparatus and a second communication apparatus. The first communication apparatus is configured to perform the method according to any one of the first aspect, the fourth aspect, or the possible implementations of the aspects, and the second communication apparatus is configured to perform the method according to any one of the second aspect, the third aspect, the fifth aspect, or the possible implementations of the aspects.

### BRIEF DESCRIPTION OF DRAWINGS

FIG. 1 is a diagram of a possible application framework in a communication system;
FIG. 2 is a diagram of another possible application framework in a communication system;
FIG. 3 is a diagram of a communication system to which a communication method according to an embodiment of this application is applicable;
FIG. 4 is a diagram of another communication system to which a communication method according to an embodiment of this application is applicable;
FIG. 5 is a diagram of a neural network according to an embodiment of this application;
FIG. 6 is a diagram of a structure of a neuron according to an embodiment of this application;
FIG. 7 is a diagram of a main procedure of a communication system;
FIG. 8 shows constellation diagrams of QPSK and 16QAM;
FIG. 9 is a schematic flowchart of an information processing method according to an embodiment of this application;
FIG. 10 is a diagram of a scenario-based constellation design according to an embodiment of this application;
FIG. 11 is a diagram of constellation sets of 4-order modulation generated based on different channel environment information under a same modulation order according to an embodiment of this application;
FIG. 12 to FIG. 14 are schematic flowcharts of information processing methods for downlink transmission according to embodiments of this application;
FIG. 15 is a diagram of data transmission based on a scenario-based constellation design according to an embodiment of this application;
FIG. 16 is another diagram of data transmission based on a scenario-based constellation design according to an embodiment of this application;
FIG. 17 is a schematic flowchart of another information processing method according to an embodiment of this application;
FIG. 18 is a diagram of a structure of a communication apparatus according to an embodiment of this application; and
FIG. 19 is a diagram of another structure of a communication apparatus according to an embodiment of this application.

### DESCRIPTION OF EMBODIMENTS

The following describes technical solutions of embodiments of this application with reference to accompanying drawings.

The technical solutions in embodiments of this application may be applied to various communication systems, for example, a long term evolution (long term evolution, LTE) system, 5th generation (5th Generation, 5G) systems such as a new radio access technology (new radio access technology, NR) system, a network integrating a plurality of systems, an internet of things system, an internet of vehicles system, an open-radio access network (open-radio access network, O-RAN) system, and future communication systems such as a 6th generation (6th Generation, 6G) system.

The technical solutions in embodiments of this application may also be applied to another communication system. For example, in the communication system, a first entity sends configuration information to a second entity, and sends data to the second entity or receives data sent by the second entity; and the second entity receives the configuration information, and sends data to the first entity based on the configuration information or receives data sent by the first entity. When the first entity is a base station, and the second entity is a terminal device (for example, a UE), the base station and the UE may form a communication system. In the communication system, the UE may send uplink data to the base station, and the base station receives the uplink data sent by the UE. The base station may also send configuration information to the UE. Different UEs may also form a communication system. In this case, both the first entity and the second entity are UEs. For example, in the internet of vehicles system, a UE 1 sends configuration information to a UE 2, and receives data sent by the UE 2; and the UE 2 receives the configuration information sent by the UE 1, and sends data to the UE 1.

Optionally, the terminal device may be referred to as a terminal, a user equipment (user equipment, UE), a mobile station (mobile station, MS), a mobile terminal (mobile terminal, MT), or the like. The terminal device may be a device having a wireless transceiver function. The terminal device may be deployed on land, including an indoor or outdoor terminal device or a handheld or vehicle-mounted terminal device; may be deployed on water (for example, on a ship); or may be deployed in air (for example, on an airplane, a balloon, and a satellite). The terminal device may be configured to connect to a person, an object, and a machine. The terminal device 120 may be widely used in various scenarios, for example, cellular communication, device-to-device (device-to-device, D2D), vehicle-to-everything (vehicle-to-everything, V2X), peer to peer (peer to peer, P2P), machine to machine (machine to machine, M2M), machine type communication (machine type communication, MTC), an internet of things (Internet of Things, IoT), virtual reality (virtual reality, VR), augmented reality (augmented reality, AR), industrial control, autonomous driving, telemedicine, a smart grid, smart furniture, smart office, a smart wearable, smart transportation, a smart city (smart city), a smart home (smart home), an uncrewed aerial vehicle, a robot, remote sensing, passive sensing, positioning, navigation and tracking, and self-delivery and mobility. The terminal device 120 may be a user equipment (UE) in the 3rd generation partnership project (3rd generation partnership project, 3GPP) standard, a fixed device, a mobile device, a handheld device, a wearable device, a cellular phone, a smartphone, a session initiation protocol (session initiation protocol, SIP) phone, a notebook computer, a personal computer, a smart book, a vehicle, a satellite, a global positioning system (global positioning system, GPS) device, a target tracking device, an uncrewed aerial vehicle, a helicopter, an aircraft, a ship, a remote control device, a smart home device, or an industrial device. The terminal device may alternatively be a communication device in a future wireless communication system.

Optionally, an apparatus configured to implement a function of the terminal may be the terminal, or may be an apparatus that can support the terminal in implementing the function, for example, a chip system, a communication module, or a modem. The apparatus may be installed in the terminal. In this embodiment of this application, the chip system may include a chip, or may include a chip and another discrete component. In the technical solutions provided in the embodiments of this application, the technical solutions provided in the embodiments of this application are described by using an example in which the apparatus for implementing a terminal function is a terminal and the terminal is a UE. A specific technology and a specific device form that are used by the terminal device are not limited in embodiments of this application.

In a possible implementation, the UE may be configured to serve as a base station. For example, the UE may serve as a scheduling entity that provides sidelink signals between UEs in V2X, D2D, P2P, or the like without relaying communication signals through a base station.

In a possible implementation, the UE may alternatively be configured to serve as a relay node. For example, the UE may serve as a relay device (relay) or an integrated access and backhaul (integrated access and backhaul, IAB) node, and is configured to provide a wireless backhaul service for the terminal device.

Optionally, the network device may be an entity, for example, a base station (base station, BS), that is on a network side and that is configured to transmit or receive a signal. The BS may be a device that is deployed in a radio access network and can perform wireless communication with a terminal. The base station may be in various forms, such as a macro base station, a micro base station, a relay station, and an access point. For example, the base station in embodiments of this application may be a base station in 5G, a base station in a 6th generation (6th generation, 6G) mobile communication system, an access network device or a module of the access network device in an open-radio access network (open-radio access network, O-RAN) system, a base station in a future mobile communication system, an access node in a Wi-Fi system, or an evolved NodeB (evolved NodeB, eNB) in LTE. The base station in 5G may also be referred to as a transmission reception point (transmission reception point, TRP) or a next-generation NodeB (next-generation NodeB, gNB). The base station may also be replaced with the following names: a radio access point, a NodeB (NodeB), a transmission point (transmission point, TP), a master station MeNB, a secondary station SeNB, a multi-standard radio (Multi-standard radio, MSR) node, a home base station, a network controller, an access node, a wireless node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a positioning node, an IAB donor (IAB donor), and the like.

The base station may be fixed or movable. For example, a helicopter or an uncrewed aerial vehicle may be configured as a mobile base station, and one or more cells may move based on a position of the mobile base station. In other examples, a helicopter or an uncrewed aerial vehicle may be configured as a device for communicating with another base station.

In some deployments, the network device mentioned in embodiments of this application may be a CU, or a DU, or a device including a CU and a DU, or a device including a control plane CU node (a central unit-control plane (central unit-control plane, CU-CP)), a user plane CU node (a central unit-user plane (central unit-user plane, CU-UP)), and a DU node. For example, the network device may include a gNB-CU-CP, a gNB-CU-UP, and a gNB-DU.

In some deployments, a plurality of radio access network (radio access network, RAN) nodes cooperate to assist the terminal in implementing radio access, and different RAN nodes respectively implement some functions of the base station. For example, the RAN node may be a CU, a DU, a CU-CP, a CU-UP, or an RU. The CU and the DU may be separately arranged, or may be included in a same network element, for example, a BBU. The RU may be included in a radio frequency device or a radio unit, for example, included in an RRU, an AAU, or an RRH.

The RAN node may support one or more types of fronthaul interfaces, and different fronthaul interfaces respectively correspond to DUs and RUs having different functions. If a fronthaul interface between a DU and an RU is a common public radio interface (common public radio interface, CPRI), the DU is configured to implement one or more baseband functions, and the RU is configured to implement one or more radio frequency functions. If the fronthaul interface between the DU and the RU is another type of interface, in comparison with the CPRI, in the fronthaul interface, a part of downlink and/or uplink baseband functions is moved for implementation. For example, for downlink, one or more of precoding (precoding), digital beamforming (beamforming, BF), or inverse fast Fourier transform (inverse fast Fourier transform, IFFT)/cyclic prefix (cyclic prefix, CP) addition is moved from the DU to the RU for implementation; and for uplink, one or more of digital beamforming (beamforming, BF) or fast Fourier transform (fast Fourier transform, FFT)/cyclic prefix (cyclic prefix, CP) removal is moved from the DU to the RU for implementation. In a possible implementation, the interface may be an enhanced common public radio interface (enhanced common public radio interface, eCPRI). In an eCPRI architecture, different split modes between the DU and the RU correspond to different categories (category, Cat) of eCPRIs, for example, eCPRI Cat A, B, C, D, E, and F.

The eCPRI Cat A is used as an example. For downlink transmission, with layer mapping as a splitting point. The DU is configured to implement the layer mapping and one or more functions before the layer mapping (to be specific, one or more of encoding, rate matching, scrambling, modulation, and the layer mapping), and other functions after the layer mapping (for example, one or more of resource element (resource element, RE) mapping, digital beamforming (beamforming, BF), or inverse fast Fourier transform (inverse fast Fourier transform, IFFT)/cyclic prefix (cyclic prefix, CP) addition) are moved to the RU for implementation. For uplink transmission, with RE demapping as a splitting point, the DU is configured to implement the demapping and one or more preceding functions (to be specific, one or more functions of decoding, rate de-matching, descrambling, demodulation, inverse discrete Fourier transform (inverse discrete Fourier transform, IDFT), channel equalization, and RE demapping), and another function (for example, one or more of digital BF or fast Fourier transform (fast Fourier transform, FFT)/CP removal) after the demapping is moved to the RU for implementation. It may be understood that, for function descriptions of DUs and RUs corresponding to various categories of eCPRIs, refer to an eCPRI protocol. Details are not described herein.

In a possible design, a processing unit configured to implement a baseband function in the BBU is referred to as a baseband high (baseband high, BBH) unit, and a processing unit configured to implement a baseband function in the RRU/AAU/RRH is referred to as a baseband low (baseband low, BBL) unit.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module.

In embodiments of this application, an apparatus configured to implement a function of a network device may be a network device, or may be an apparatus that can support the network device in implementing the function, for example, a chip system, a hardware circuit, a software module, or a combination of a hardware circuit and a software module. The apparatus can be installed in the network device, or can match the network device for use. In embodiments of this application, only an example in which the apparatus for implementing the function of the network device is a network device is used for description, and constitutes no limitation on the solutions in embodiments of this application.

The network device and/or the terminal device may be deployed on the land, including an indoor device, an outdoor device, a handheld device, or a vehicle-mounted device; may be deployed on the water; or may be deployed on an airplane, a balloon, and a satellite in the air. A scenario in which the network device and the terminal device are located is not limited in embodiments of this application. In addition, the terminal device and the network device may be hardware devices; or may be software functions running on dedicated hardware or software functions running on general-purpose hardware, for example, virtualized functions instantiated on a platform (for example, a cloud platform); or may be entities including a dedicated or general-purpose hardware device and a software function. Specific forms of the terminal device and the network device are not limited in this application.

In a wireless communication network, for example, in a mobile communication network, services supported by the network are increasingly diversified, and therefore requirements that need to be satisfied are increasingly diversified. For example, the network needs to be capable of supporting an ultra-high rate, an ultra-low latency, and/or massive connections. These features make network planning, network configuration, and/or resource scheduling increasingly complex. In addition, because the network has increasingly powerful functions, for example, supports an increasingly high spectrum and supports new technologies such as a higher-order multiple-input multiple-output (multiple-input multiple-output, MIMO), beamforming, and/or beam management, network energy saving becomes a hot research topic. These new requirements, scenarios, and features cause unprecedented challenges to network planning, operation and maintenance, and efficient operation. To address the challenges, an artificial intelligence technology may be introduced into the wireless communication network to implement network intelligence.

To support an AI technology in a wireless network, an AI node may be further introduced into the network.

Optionally, the AI node may be deployed at one or more of the following locations in the communication system: an access network device, a terminal device, a core network device, or the like. Alternatively, the AI node may be independently deployed, for example, deployed at a location other than any one of the foregoing devices, for example, a host or a cloud server in an over the top (over the top, OTT) system. The AI node may communicate with another device in the communication system. For example, the another device may be one or more of the following: a network device, a terminal device, a network element of a core network, or the like.

It can be understood that a quantity of AI nodes is not limited in this application. For example, when there are a plurality of AI nodes, the plurality of AI nodes may be divided based on functions. For example, different AI nodes are responsible for different functions.

It may be further understood that, the AI nodes may be independent devices, may be integrated into a same device to implement different functions, may be network elements in a hardware device, may be software functions running on dedicated hardware, or may be virtualized functions instantiated on a platform (for example, a cloud platform). A specific form of the AI node is not limited in this application.

The AI node may be an AI network element or an AI module.

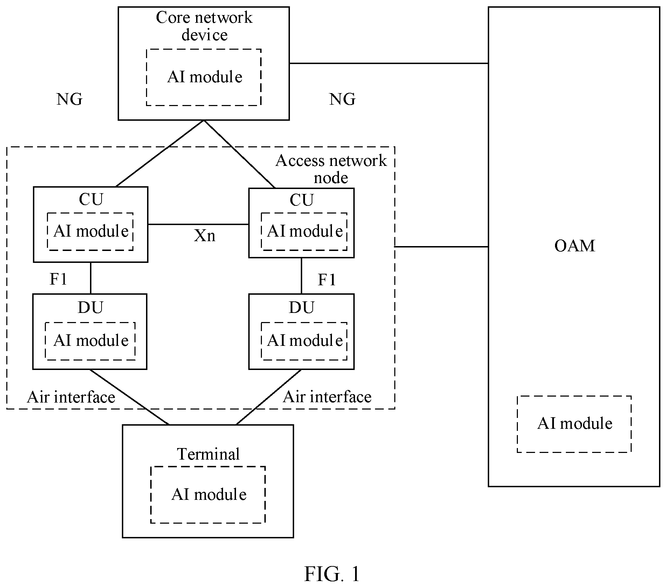

FIG. 1 is a diagram of a possible application framework in a communication system. As shown in FIG. 1, network elements in the communication system are connected through an interface (for example, NG or Xn) or an air interface. One or more AI modules (for clarity, FIG. 1 shows only one AI module) are disposed in one or more of these network element nodes, such as a core network device, an access network node (RAN node), a terminal, or operations, administration, and maintenance (operations, administration, and maintenance, OAM). The access network node may serve as an independent RAN node, or may include a plurality of RAN nodes, for example, include a CU and a DU. One or more AI modules may be further disposed in the CU and/or the DU. Optionally, the CU may be further split into a CU-CP and a CU-UP. One or more AI models are disposed in the CU-CP and/or the CU-UP.

The AI module is configured to implement a corresponding AI function. AI modules deployed in different network elements may be the same or different. A model of the AI module is configured based on different parameters, and the AI module may implement different functions. The model of the AI module may be configured based on one or more of the following parameters: a structure parameter (for example, at least one of the following: a quantity of layers of a neural network, a width of the neural network, a connection relationship between layers, a weight value of a neuron, an activation function of the neuron, or a bias in the activation function), an input parameter (for example, a type of the input parameter and/or a dimension of the input parameter), or an output parameter (for example, a type of the output parameter and/or a dimension of the output parameter). The bias in the activation function may also be referred to as a bias of a neural network.

One AI module may have one or more models. One model may obtain one output through inference, where the output includes one or more parameters. Learning processes, training processes, or inference processes of different models may be deployed in different nodes or devices, or may be deployed in a same node or device.

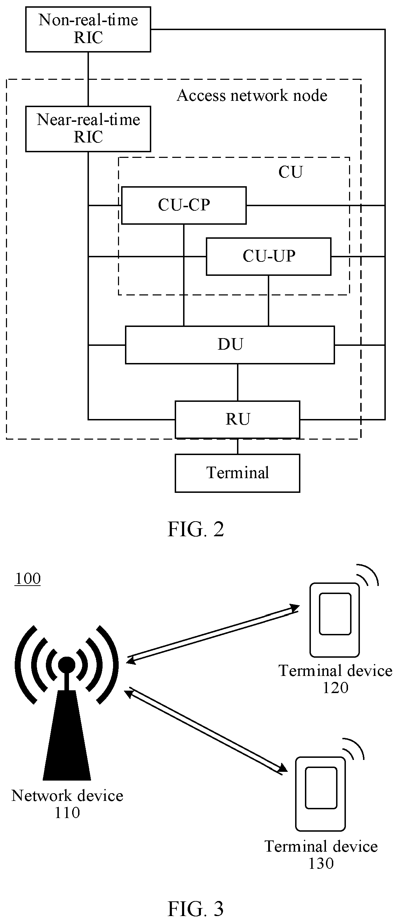

FIG. 2 is a diagram of another possible application framework in a communication system. As shown in FIG. 2, the communication system includes a RAN intelligent controller (RAN intelligent controller, RIC). For example, the RIC may be AI modules 117 and 118 shown in FIG. 1, and is configured to implement an AI-related function. The RIC includes a near-real-time RIC (near-real-time RIC, near-RT RIC) and a non-real-time RIC (non-real-time RIC, Non-RT RIC). The non-real-time RIC mainly processes non-real-time information, for example, delay-insensitive data. A delay of the data may be at a granularity of seconds. A real-time RIC mainly processes near-real-time information, for example, delay-sensitive data. A delay of the data is at a granularity of tens of milliseconds.

The near-real-time RIC is configured to perform model training and inference, for example, is configured to train an AI model and perform inference by using the AI model. The near-real-time RIC may obtain information on a network side and/or a terminal side from a RAN node (for example, a CU, a CU-CP, a CU-UP, a DU, and/or an RU) and/or a terminal. The information may serve as training data or inference data. Optionally, the near-real-time RIC may deliver an inference result to the RAN node and/or the terminal. Optionally, the inference result may be exchanged between the CU and the DU and/or between the DU and the RU. For example, the near-real-time RIC delivers the inference result to the DU, and the DU sends the inference result to the RU.

The non-real-time RIC is also configured to perform model training and inference, for example, is configured to train an AI model and perform inference by using the model. The non-real-time RIC may obtain information on a network side and/or a terminal side from a RAN node (for example, a CU, a CU-CP, a CU-UP, a DU, and/or an RU) and/or a terminal. The information may serve as training data or inference data, and an inference result may be delivered to the RAN node and/or the terminal. Optionally, the inference result may be exchanged between the CU and the DU and/or between the DU and the RU. For example, the non-real-time RIC delivers the inference result to the DU, and the DU sends the inference result to the RU.

The near-real-time RIC and the non-real-time RIC each may alternatively be independently deployed as a network element. Optionally, the near-real-time RIC and the non-real-time RIC may alternatively serve as a part of another device. For example, the near-real-time RIC is deployed on the RAN node (for example, the CU or the DU), and the non-real-time RIC is deployed on an OAM, a cloud server, a core network device, or another network device.

For example, the network device may be one or more devices in the core network device, the access network node (RAN node), or the OAM shown in FIG. 1. For example, the AI module may be the RIC shown in FIG. 2, for example, a near-real-time RIC or a non-real-time RIC. For example, the near-real-time RIC is deployed on the RAN node (for example, a CU or a DU), and the non-real-time RIC is deployed on the OAM, the cloud server, the core network device, or another network device. For example, the near-real-time RIC and the non-real-time RIC each may be independently deployed as a network element, and the network device may be the near-real-time RIC or the non-real-time RIC.

FIG. 3 is a diagram of a communication system to which a communication method according to an embodiment of this application is applicable. As shown in FIG. 3, the communication system 100 may include at least one network device, for example, a network device 110 shown in FIG. 3. The communication system 100 may further include at least one terminal device, for example, a terminal device 120 and a terminal device 130 shown in FIG. 3. The network device 110 may communicate with the terminal device (for example, the terminal device 120 and the terminal device 130) through a radio link. Communication devices, for example, the network device 110 and the terminal device 120, in the communication system may communicate with each other by using a multiple-antenna technology.

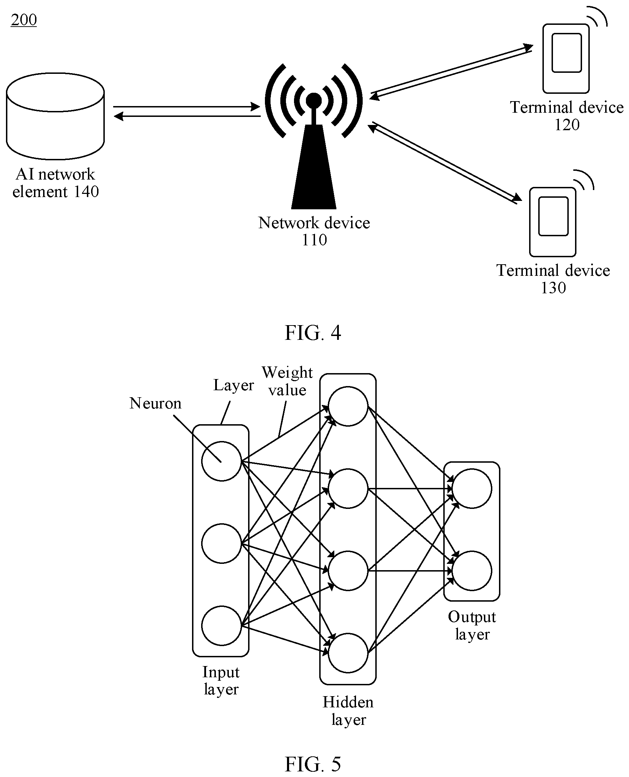

FIG. 4 is a diagram of another communication system to which a communication method according to an embodiment of this application is applicable. Compared with the communication system 100 shown in FIG. 3, the communication system 200 shown in FIG. 4 further includes an AI network element 140. The AI network element 140 is configured to perform an AI-related operation, for example, constructing a training dataset or training an AI model.

In a possible implementation, the network device 110 may send data related to training of the AI model to the AI network element 140, and the AI network element 140 constructs the training dataset and trains the AI model. For example, the data related to the training of the AI model may include data reported by a terminal device. The AI network element 140 may send a result of an operation related to the AI model to the network device 110, and the network device 110 forwards the result of the operation related to the AI model to the terminal device. For example, the result of the operation related to the AI model may include at least one of the following: a trained AI model, an evaluation result or a test result for the model, or the like. For example, a part of the trained AI model may be deployed on the network device 110, and the other part is deployed on the terminal device. Alternatively, the trained AI model may be deployed on the network device 110. Alternatively, the trained AI model may be deployed on the terminal device.

It should be understood that, in FIG. 4, that the AI network element 140 is directly connected to the network device 110 is used merely as an example for description. In another scenario, the AI network element 140 may alternatively be connected to the terminal device. Alternatively, the AI network element 140 may be connected to both the network device 110 and the terminal device. Alternatively, the AI network element 140 may be connected to the network device 110 via a third-party network element. A connection relationship between the AI network element and another network element is not limited in embodiments of this application.

The AI network element 140 may alternatively be disposed on a network device and/or a terminal device as a module, for example, disposed on the network device 110 or the terminal device shown in FIG. 3.

It should be noted that, FIG. 3 and FIG. 4 are merely simplified diagrams of examples for ease of understanding. For example, the communication system may further include another device, for example, may further include a wireless relay device and/or a wireless backhaul device, which are/is not shown in FIG. 3 and FIG. 4. During actual application, the communication system may include a plurality of network devices, and may also include a plurality of terminal devices. Quantities of network devices and terminal devices included in the communication system are not limited in embodiments of this application.

For ease of understanding the solutions in embodiments of this application, the following provides an example explanation of terms that may be used in embodiments of this application.

### 1. Artificial intelligence, machine learning, AI model, and neural network

The artificial intelligence (artificial intelligence, AI) can enable machines to have human intelligence, for example, can enable the machines to simulate some intelligent human behaviors by using computer software and hardware. Usually, the artificial intelligence is a technology that presents human intelligence by using a normal computer program. The artificial intelligence may be defined as a machine or a computer that simulates humans and has cognitive functions, such as learning and problem-resolving, related to human thinking. The artificial intelligence can learn from past experience, make reasonable decisions, and respond quickly. An objective of the artificial intelligence is to understand intelligence by constructing symbolic reasoning or computer programs for reasoning.

The machine learning (machine learning) is an important technical way to implement the artificial intelligence, that is, problems in the artificial intelligence are resolved through the machine learning. A machine learning theory is mainly to design and analyze some algorithms that enable a computer to automatically "learn". A machine learning algorithm is an algorithm that automatically analyzes data to obtain a rule and uses the rule to predict unknown data. Because the machine learning algorithm involves a large quantity of statistical theories, the machine learning is particularly closely related to inferential statistics, and is also referred to as a statistical learning theory. The machine learning may be classified into supervised learning, unsupervised learning, and reinforcement learning.

The AI model is an algorithm or a computer program that can implement an AI function. The AI model represents a mapping relationship or function between an input and an output of the model. The AI model may be for inference (or prediction), to be specific, an output corresponding to a given input may be predicted by using the AI model. The output may also be referred to as an inference result. The AI model may be a neural network or another machine learning model.

The neural network (neural network, NN) is a specific implementation form of the machine learning, and is a mathematical model that simulates behavior characteristics of an animal neural network to process information. According to a general approximation theorem, the neural network can approximate any continuous function in theory, so that the neural network has a capability of learning any mapping. Therefore, the neural network can accurately perform abstract modeling for a complex high-dimension problem. In a conventional communication system, a communication module is designed by relying on rich expert knowledge. However, in a deep neural network (deep neural network, DNN)-based communication system, an implicit pattern structure may be discovered from a large quantity of datasets, to establish a mapping relationship between data, and obtain better performance than that of a conventional modeling method.

The neural network usually includes a plurality of layers of structures, and each layer may include one or more logical determining units. The logical determining unit is referred to as a neuron (Neuron). Increasing a depth and/or a width of the neural network can improve an expression capability of the neural network, and provide more powerful information extraction and abstract modeling capabilities for complex systems. The depth of the neural network may be understood as a quantity of layers included in the neural network, and a quantity of neurons included in each layer may be referred to as a width of the layer. FIG. 5 is a diagram of a neural network according to an embodiment of this application. In an implementation, the neural network includes an input layer and an output layer. After performing neuron processing on a received input, the input layer of the neural network transfers a result to the output layer, and the output layer obtains an output result of the neural network. In another implementation, the neural network includes an input layer, a hidden layer, and an output layer. After performing neuron processing on a received input, the input layer of the neural network transfers a result to the intermediate hidden layer. The hidden layer then transfers a calculation result to the output layer or an adjacent hidden layer. Finally, the output layer obtains an output result of the neural network. One neural network may include one or more sequentially connected hidden layers. A quantity of hidden layers in the neural network is not limited in this application. A DNN usually includes a plurality of hidden layers. The hidden layer usually affects information extraction and function fitting capabilities. The function fitting capability of the DNN can be improved by increasing a quantity of hidden layers of the DNN or increasing a width of each layer. The neural network shown in FIG. 5 includes one input layer, one hidden layer, and one output layer. The input layer has three neurons, the hidden layer has four neurons, and the output layer has two neurons. It may be understood that a quantity of layers in the neural network shown in FIG. 5 and a quantity of neural network elements included in each layer are merely examples.

Each connecting-line between neurons corresponds to a weight (where a value of the weight is referred to as a weight value), and the weight value may be updated through training. Each neuron may further correspond to a bias value, and the bias value may be updated through training. Updating the neural network refers to updating these weight values and bias values. After the structure of the neural network is known, that is, how an output of a previous neuron is inputted into a subsequent neuron, and the weight values and the bias values are known, all information of the neural network is known.

It can be learned from FIG. 5 that one neuron may have a plurality of input connecting-lines, and each neuron computes an output based on an input. For example, each neuron performs a weighted summation operation on input values of the neuron, and generates an output through an activation function on a weighted summation result. One neuron may have a plurality of output connecting-lines, and an output of a neuron serves as an input of a next neuron. It should be understood that the input layer has only an output connecting-line, each neuron at the input layer is a value that is input into the neural network, and a value of each neuron serves as inputs of all output connecting-lines. The output layer has only an input connecting-line.

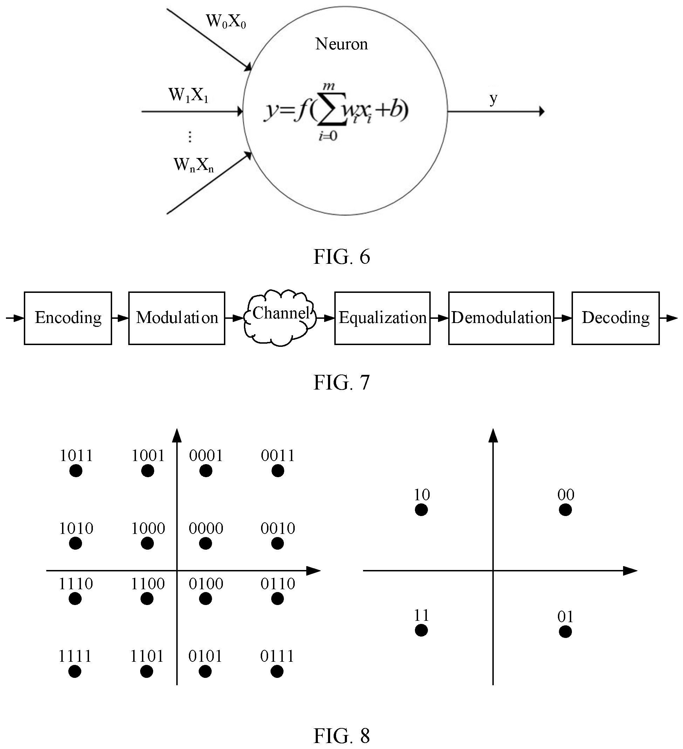

FIG. 6 is a diagram of a structure of a neuron according to an embodiment of this application. As shown in FIG. 6, it is assumed that inputs of the neuron are x=[x₀, x₁, ..., xₘ], and weight values corresponding to the inputs are w=[w₀, w₁, ..., wₘ]. m is a positive integer, and wᵢ and xᵢ may be of various possible types such as decimals, integers (for example, 0, positive integers, or negative integers), or complex numbers. wᵢ serves as a weight of xᵢ and is used to weight xᵢ. A bias value for performing weighted summation on the input values based on the weight values is b. Assuming that an activation function is represented by f(z), an output y of the neuron shown in FIG. 6 is: $y = f \left({\sum }_{i = 0}^{m} {w}_{i} {x}_{i} + b\right)$ (1)

The bias value b may be any value, for example, a decimal, an integer (0, a positive integer, or a negative integer), or a complex number. Activation functions of different neurons in the neural network may be the same or may be different.

Forms of the activation function f(z) may be diversified. Assuming that an activation function f(z) of a neuron is max(0, z), an output of the neuron is $y = f \left({\sum }_{i = 0}^{i = m} {w}_{i} ∗ {x}_{i} + b\right) = max \left(0, {\sum }_{i = 0}^{i = m} {w}_{i} ∗ {x}_{i} + b\right)$*.* For another example, if an activation function f(z) of a neuron is z, an output of the neuron is $y = f \left({\sum }_{i = 0}^{i = m} {w}_{i} ∗ {x}_{i} + b\right) = {\sum }_{i = 0}^{i = m} {w}_{i} ∗ {x}_{i} + b$*.* Details are not listed herein one by one. A form of the activation function is not limited in this application.

A loss function may be defined in a process of training the neural network. The loss function describes a disparity or difference between an output of the neural network and target data. A smaller loss function indicates that the output of the neural network better fits the target data. An example in which a mean squared error serves as the loss function loss is as follows: $loss = {\left({y}_{out}-{y}_{target}\right)}^{2}$ (2)

yₒᵤₜ represents the output of the neural network, and y_{target} represents the target data. Minimizing the loss function (that is, the loss in Formula (2)) refers to minimizing a difference between values of the two (that is, yₒᵤₜ and y_{target}). It should be understood that the loss function may alternatively be a cross-entropy loss function, an absolute-value loss function, or the like in addition to the mean squared error loss function. A type of the loss function is not limited in this application. The process of training the neural network is a process of adjusting a part or all of parameters of the neural network such as the quantity of layers or the width of the neural network, a weight value of a neuron, or a parameter in an activation function of a neuron, so that a value of the loss function is less than a threshold or meets a target requirement.

### 2. Modulation, demodulation, and constellation

FIG. 7 is a diagram of a main procedure of a communication system. In FIG. 7, point-to-point communication is used as an example. A transmit device or a transmit end needs to process, through encoding and modulation, a signal into a signal suitable for transmission on a channel. For example, the channel is a radio channel. A receive device or a receive end needs to perform processing such as equalization, demodulation, and decoding to obtain the original signal. It can be learned that a process of the receive device or a receive end side is inverse to that of the transmit device or a transmit end side. As shown in FIG. 7, positions of modulation and demodulation in the main procedure of the communication system are shown in FIG. 7. Modulation is to map a discrete bit stream including 0s and 1s into modulation symbols in a specific manner for signal sending. Demodulation is to demodulate a received signal or an equalized signal, and perform decoding to obtain a corresponding signal. Common modulation schemes include amplitude shift keying modulation (Amplitude shift keying modulation, ASK), frequency shift keying modulation (Frequency shift keying modulation, FSK), phase shift keying modulation (Phase shift keying modulation, PSK), quadrature amplitude modulation (Quadrature amplitude modulation, QAM), and the like.

All possible modulation symbols corresponding to a modulation scheme and a mapping relationship between a modulation symbol and a bit in the modulation scheme are referred to as a constellation set, a constellation, or a constellation diagram. A quantity of all possible modulation symbols corresponding to each modulation scheme is usually a power of 2, that is, 2^{m}. Each modulation symbol represents m-bit (bit) information, and m may also be referred to as an order of the modulation scheme. Two modulation schemes, namely, quadrature phase shift keying (Quadrature Phase Shift Keying, QPSK) modulation and 16-quadrature amplitude modulation (Quadrature Amplitude Modulation, QAM), are used as an example. Refer to a constellation diagram of QPSK shown in a right figure in FIG. 8. A quantity of all possible modulation symbols corresponding to the modulation scheme is 4, each modulation symbol represents 2-bit information, and an order of the modulation scheme is 2. Refer to a constellation diagram of 16QAM shown in a left figure in FIG. 8. A quantity of all possible modulation symbols corresponding to the modulation scheme is 16, each modulation symbol represents 4-bit information, and an order of the modulation scheme is 4.

As shown in FIG. 7, demodulation is an inverse process of modulation, that is, a received signal (or referred to as an equalized signal) is recovered to a bit stream. A demodulator is classified into a hard-decision demodulator and a soft-decision demodulator. An output of the hard-decision demodulator is 0 or 1, and an output of the soft-decision demodulator is a log-likelihood ratio (log-likelihood ratio, LLR) (also referred to as soft bit information). The LLR is a logarithm of a quotient of a probability that 1 bit is 1 (for example, denoted as p(u=1)) and a probability that the bit is 0 (for example, denoted as p(u=0)), that is, log(p(u=1)/p=0).

### 3. Channel environment information

In embodiments of this application, the channel environment information includes channel state information (channel state information, CSI), and further includes measurement time of a channel. The channel state information includes at least one of a channel measurement result or channel delay spread information of the channel. The channel delay spread information includes one or more of an average delay spread, a maximum delay spread, and a root mean square delay spread.

The channel state information is information that can reflect a channel characteristic and channel quality. During channel measurement, a receive end solves channel environment information based on a reference signal sent by a transmit end, that is, estimates channel information by using a channel estimation method. For example, the reference signal may include one or more of a channel state information reference signal (channel state information reference signal, CSI-RS), a synchronization signal/broadcast channel block (synchronization signal/physical broadcast channel block, SSB), a channel sounding reference signal (sounding reference signal, SRS), a demodulation reference signal (demodulation reference signal, DMRS), and the like. The CSI-RS, the SSB, the DMRS, and the like may be used to measure downlink CSI, and may be referred to as a downlink reference signal. The SRS, the DMRS, and the like may be used to measure uplink CSI, and may be referred to as an uplink reference signal.

An FDD communication scenario is used as an example. In the FDD communication scenario, an uplink channel and a downlink channel are not reciprocal, in other words, reciprocity between the uplink channel and the downlink channel cannot be ensured. Therefore, a network device usually sends a downlink reference signal to a terminal device, and the terminal device performs channel measurement and interference measurement based on the received downlink reference signal to estimate a channel measurement result of the downlink channel. The terminal device generates a CSI report in a manner predefined in a protocol or a manner configured by the network device, and feeds back the CSI report to the network device, so that the network device obtains the channel measurement result of the downlink channel. Correspondingly, the terminal device usually sends an uplink reference signal, and the network device performs channel measurement and interference measurement based on the received uplink reference signal to perform estimation, to obtain a channel measurement result of the uplink channel.

For example, the channel measurement result may include at least one of the following: a channel quality indicator (channel quality indicator, CQI), a precoding matrix indicator (precoding matrix indicator, PMI), a rank indicator (rank indicator, RI), a CSI-RS resource indicator (CSI-RS resource indicator, CRI), a layer indicator (layer indicator, LI), reference signal received power (reference signal received power, RSRP), a signal to interference plus noise ratio (signal to interference plus noise ratio, SINR), and the like. The signal to interference plus noise ratio may also be referred to as a signal-to-interference-plus-noise ratio.

It should be understood that, in this application, an indication includes a direct indication (also referred to as an explicit indication) and an implicit indication. Directly indicating information A means including the information A. Implicitly indicating the information A means indicating the information A by using a correspondence between the information A and information B and directly indicating the information B. The correspondence between the information A and the information B may be predefined, prestored, pre-burned, or preconfigured.

It should be understood that, in this application, that information C is used to determine information D includes that the information D is determined only based on the information C, and also includes that the information D is determined based on the information C and other information. In addition, that the information C is used to determine the information D may further include an indirect determining case, for example, a case in which the information D is determined based on information E, and the information E is determined based on the information C.

In addition, in embodiments of this application, that "a network element A sends information A to a network element B" may be understood as that a destination end of the information A or an intermediate network element in a transmission path between the network element A and the destination end is the network element B, and may include directly or indirectly sending information to the network element B; and that "a network element B receives information A from a network element A" may be understood as that a source end of the information A or an intermediate network element in a transmission path between the network element B and the source end is the network element A, and may include directly or indirectly receiving information from the network element A. Information may undergo necessary processing, for example, a format change, between a source end for sending the information and a destination end. However, the destination end may understand valid information from the source end. Similar expressions in this application may be understood similarly. Details are not described herein.

It may be understood that, in embodiments of this application, "B corresponding to A", "A corresponds to B", or a similar expression thereof indicates that B is associated with A, or B may be determined based on A. However, it should be further understood that determining B according to (or based on) A does not mean that B is determined according to (or based on) A only, and B may alternatively be determined according to (or based on) A and/or other information.

In descriptions of this application, the terms such as "first" and "second" are merely used to distinguish between different objects, and do not limit a quantity and an execution sequence. In addition, the terms such as "first" and "second" do not indicate a definite difference. In addition, the terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

In descriptions of this application, unless otherwise specified, "/" means "or". For example, A/B may indicate A or B. The term "and/or" in this specification describes only an association relationship between associated objects and indicates that there may be three relationships. For example, A and/or B may represent the following three cases: Only A exists, both A and B exist, and only B exists. In addition, "at least one item (piece)", "one or more of the following items (pieces)", or a similar expression thereof indicates any combination of these items, including a singular item (piece) or any combination of plural items (pieces). For example, at least one of a, b, or c may represent a, b, c, a and b, a and c, b and c, or a, b, and c. a, b, and c each may be singular or plural.

In descriptions of this application, the term "example", "for example", or the like is used to represent giving an example, an illustration, or a description. Any embodiment or design scheme described as "example", "such as" or "for example" in this application should not be explained as being more preferred or having more advantages than another embodiment or design scheme. Exactly, use of the word "example", "such as", "for example", or the like is intended to present a related concept in a specific manner.

It may be understood that, in descriptions of this application, both "when" and "if" mean that an apparatus performs corresponding processing in an objective situation, are not intended to limit time, do not require the apparatus to necessarily have a determining action during implementation, and do not mean another limitation.

"Simultaneously" in this application may be understood as being at a same time point, may be understood as being in a time period, or may be understood as being in a same period, and may be specifically understood with reference to context.

In this application, unless otherwise specified, an element indicated in a singular form is intended to indicate "one or more", but does not indicate "one and only one".

In addition, the terms "system" and "network" may be used interchangeably in this specification.

In an NR system, mainly used modulation schemes are binary phase shift keying (binary phase shift keying, BPSK) modulation, QPSK modulation, nQAM (where a value of n is 16, 64, 256, or 1024) modulation, and the like. In constellation diagrams of these modulation schemes, modulation symbols are evenly distributed in a regular shape, for example, a square. In addition, a modulation scheme under each modulation order is fixed, and is irrelevant to a channel environment. For example, once a network device determines a modulation order based on channel quality information, a modulation scheme is also fixed. Different modulation schemes cannot be determined based on the channel environment under a same modulation order, resulting in a limitation on a gain. In an additive white Gaussian noise (additive white gaussian noise, AWGN) channel, channel capacities (Channel Capacity) of QPSK and nQAM differ from that of a Shannon limit in gain. In a fading channel, the channel capacities of QPSK and nQAM also differ from that of the Shannon limit in gain. The difference in gain in the fading channel is larger than that in the AWGN channel.

To improve a modulation gain, an artificial intelligence (artificial intelligence, AI)-based training solution is used to design constellation modulation. A constellation diagram of a modulation scheme designed in this manner is usually irregular, and a part of a constellation modulation gain can be obtained. In an AI-based constellation modulation design manner, a transmit end and a receive end can perform joint training, that is, train neural networks at both the transmit end and the receive end to design the constellation modulation. To ensure that the networks at both ends can operate simultaneously and converge at an air interface, a parameter of an AI model, for example, a gradient or other information, is transmitted. However, because the transmitted information is generally compressed information, which incur a compression loss and the like, constellation inconsistency may occur between the receive end and the transmit end, resulting in a limitation on a gain.

This application provides an information processing method. In the method, a first device sends first information to a second device, where the first information indicates constellation information of a first constellation and/or first channel environment information related to the first constellation; and the first device receives second information from the second device, where the second information indicates that a second constellation is a constellation updated based on the first information. The first constellation is, in the first device, a mapping relationship between a bit and a modulation symbol that is determined by using a first artificial intelligence model, and the second constellation is, in the second device, a mapping relationship between an equalized signal or a received signal and soft bit information that is determined by using a second artificial intelligence model.

It can be learned that, in the method, the first device may send, to the second device by using the first information, constellation information of a constellation used for modulation and/or related channel environment information. In this way, the second device can update, based on the first information, a constellation used for demodulation, so that constellations at a receive end and a transmit end are consistent, to improve a demodulation gain.

The following describes embodiments of this application with reference to the accompanying drawings and the foregoing content.

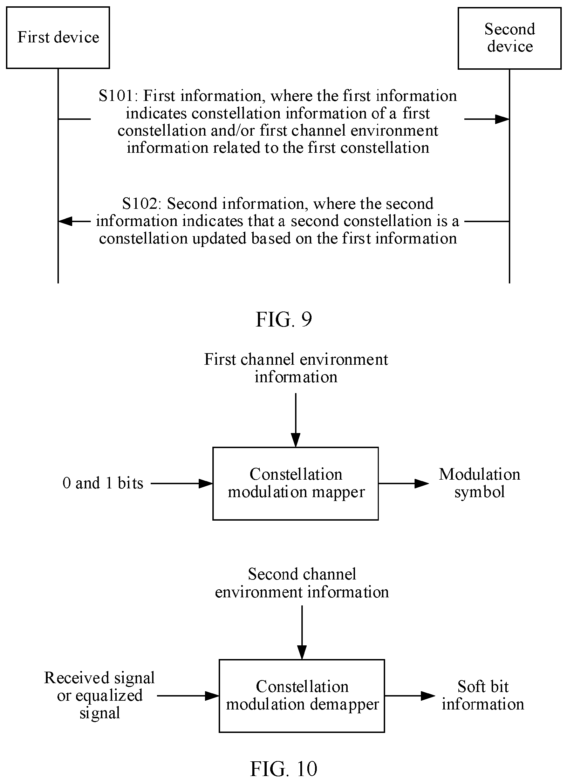

FIG. 9 is a schematic flowchart of an information processing method according to an embodiment of this application. The information processing method is described from a perspective of interaction between a first device and a second device. The first device may be referred to as a data transmit device or a data transmit apparatus, and is referred to as a transmit device or a transmit apparatus for short. Correspondingly, the second device may also be referred to as a data receive device or a data receive apparatus, and is referred to as a receive device or a receive apparatus for short. For downlink transmission, the first device may be, for example, a network device or a module or a unit configured to implement all or a part of functions of the network device, and correspondingly, the second device may be, for example, a terminal device or a module or a unit configured to implement all or a part of functions of the terminal device. For uplink transmission, the first device may be, for example, a terminal device or a module or a unit configured to implement all or a part of functions of the terminal device, and the second device may be, for example, a network device or a module or a unit configured to implement all or a part of functions of the network device.

As shown in FIG. 9, the information processing method includes but is not limited to the following steps.

S101: The first device sends first information to the second device, and correspondingly, the second device receives the first information, where the first information indicates constellation information of a first constellation and/or first channel environment information related to the first constellation.

S102: The second device sends second information to the first device, and correspondingly, the first device receives the second information, where the second information indicates that a second constellation is a constellation updated based on the first information.

Optionally, before step S101, the first device determines a mapping relationship between all possible modulation symbols and bits, namely, the first constellation, in a modulation scheme by using a first artificial intelligence model; and the second device determines a mapping relationship between an equalized signal or a received signal and soft bit information, namely, the second constellation, by using a second artificial intelligence model. In other words, the first constellation is a constellation used by the first device to perform modulation, and the second constellation is a constellation used by the second device to perform corresponding demodulation.

Optionally, the first artificial intelligence model corresponds to a constellation modulation mapper that outputs a modulation symbol for an input bit and the input first channel environment information; and the second artificial intelligence model corresponds to a constellation modulation demapper that outputs soft bit information for an input equalized signal or received signal and input second channel environment information related to the second constellation.

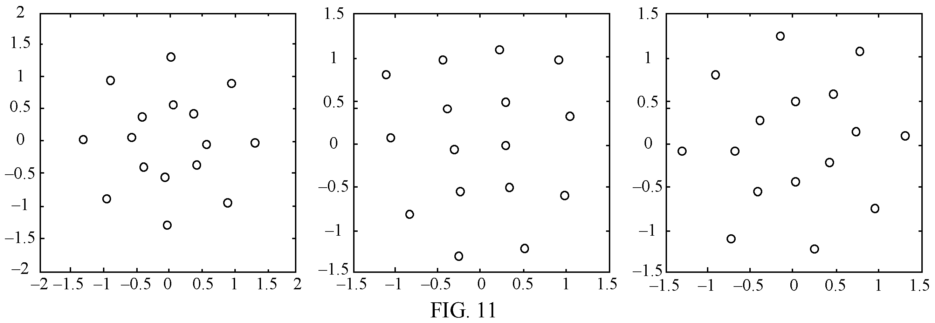

FIG. 10 is a diagram of a scenario-based constellation design according to an embodiment of this application. As shown in FIG. 10, both a constellation modulation mapper and a constellation modulation demapper are implemented by using AI models. The constellation modulation mapper uses not only a bit stream (0 and 1 bits) as an input, but also first channel environment information as an additional input. An output of the constellation modulation mapper is a constellation set (which may also be referred to as a constellation diagram or constellations as described above), and different constellation sets may be generated based on different channel environment information. FIG. 11 is a diagram of constellation sets of 4-order modulation generated based on different channel environment information under a same modulation order according to an embodiment of this application. As shown in FIG. 11, a constellation set of 4-order modulation includes 2⁴=16 modulation symbols and a mapping relationship between each modulation symbol and 4 bits. Three constellation sets of 4-order modulation are designed in real time based on the channel environment information, thereby improving a modulation gain.

In a constellation set, a mapping relationship between a modulation symbol and a bit in a constellation may be that modulation symbols in the constellation are arranged in ascending order or descending order of corresponding m bits. For example, if the modulation symbols are arranged in ascending order of the corresponding m bits, the mapping relationship of 4-order modulation may be: A 1^{st} modulation symbol corresponds to 0000, a 2^{nd} modulation symbol corresponds to 0001, a 3^{rd} modulation symbol corresponds to 0010, ..., a 15^{th} modulation symbol corresponds to 1110, and a 16^{th} modulation symbol corresponds to 1111.

As shown in FIG. 10, the constellation modulation demapper uses not only an equalized signal as an input, but also second channel environment information as an additional input. A log-likelihood ratio (log-likelihood ratio, LLR) corresponding to a modulation symbol of the constellation modulation demapper serves as soft information (also referred to as soft bit information) obtained through decoding.

In an assumed ideal situation, the constellation modulation mapper and the constellation modulation demapper may determine, based on different channel environment information, constellation sets generated by the constellation modulation mapper. As shown in FIG. 10, the constellation modulation mapper maps 0 and 1 bits to corresponding modulation symbols by using a first artificial intelligence model. After channel transmission, the constellation modulation demapper performs demapping based on an equalized signal or a received signal by using a second artificial intelligence model, to obtain soft bit information. In the scenario-based constellation design, a first device determines a first constellation based on first channel environment information obtained by the first device through measurement, and a second device determines a second constellation based on second channel environment information obtained by the second device through measurement. Because the first device and the second device respectively use different time-frequency resources and/or measurement periodicities of reference signals to measure the channel environment information, in a case of a low signal-to-noise ratio, the channel environment information obtained by the first device and the second device through measurement has a large error. Therefore, the first constellation and the second constellation cannot be consistent in real time, that is, the first constellation and the second constellation differ from each other, for example, in at least one of all corresponding modulation symbols and a mapping relationship between a bit and a modulation symbol. In step S101, the first device sends, to the second device, the determined first constellation or the first channel environment information used to determine the first constellation, to facilitate timely update of the second constellation by the second device.

The constellation information of the first constellation includes constellation update time of the first constellation, and further includes at least one of the following: one or more modulation symbols of the first constellation; a variation of a modulation symbol of the first constellation relative to a modulation symbol of a third constellation, where the third constellation is, in the first device, a mapping relationship between a bit and a modulation symbol that is most recently updated before the update time of the first constellation; or all modulation symbols output by the constellation modulation mapper corresponding to the first artificial intelligence model. Correspondingly, constellation information of the second constellation includes constellation update time of the second constellation, and further includes at least one of the following: one or more modulation symbols of the second constellation; a variation of a modulation symbol of the second constellation relative to a modulation symbol of a fourth constellation, where the fourth constellation is, in the second device, a mapping relationship between the equalized signal or the received signal and the soft bit information that is most recently updated before the update time of the second constellation; or all modulation symbols of the constellation modulation demapper corresponding to the second artificial intelligence model.

The constellation update time of the first constellation may be time or a periodicity at which the first constellation is generated or updated in the first device, and the third constellation is a constellation that is updated once before the constellation update time of the first constellation in the first device. Correspondingly, the constellation update time of the second constellation may be time or a periodicity at which the second constellation is generated or updated in the second device, and the fourth constellation is a constellation that is updated once before the constellation update time of the second constellation in the second device.

The first channel environment information includes measurement time of a first channel, and further includes at least one of a channel measurement result or channel delay spread information of the first channel. The second channel environment information includes measurement time of a second channel, and further includes at least one of a channel measurement result or channel delay spread information of the second channel. The first channel is a channel through which the first device sends information to the second device. Correspondingly, the second channel is a channel through which the second device sends information to the first device. For example, if the first device is a network device, and the second device is a terminal device, the first channel is a downlink channel, and the second channel is an uplink channel. For another example, if the first device is a terminal device, and the second device is a network device, the first channel is an uplink channel, and the second channel is a downlink channel.

The channel measurement result of the first channel or the second channel may be a first channel or a second channel of one or more resource elements (resource element, RE). The measurement time of the first channel or the second channel may include measurement time of the channel measurement result and/or measurement time of the channel delay spread information. In addition, it should be noted that time in this application, for example, the measurement time or the constellation update time, may be a time point, a time period, a periodicity, or the like.

Optionally, after step S101, the second device may determine, based on the constellation information of the first constellation and/or the first channel environment information, and the constellation information of the second constellation and/or the second channel environment information, whether to update the second constellation. If the second device determines to update the second constellation, the second device updates the second constellation based on the constellation information of the first constellation and/or the first channel environment information, and performs step S102, that is, sends the second information to the first device. If the second device determines not to update the second constellation, the second device may not send the second information. Optionally, if the first device does not receive the second information within preset time, the first device may consider by default that the second constellation in the second device is consistent with the first constellation, and may perform subsequent data transmission.

For example, if the constellation update time of the first constellation is later than the constellation update time of the second constellation, the second device determines to update the second constellation, and does not need to send the second information; or if the constellation update time of the first constellation is earlier than the constellation update time of the second constellation, the second device determines not to update the second constellation. For another example, if a difference between the constellation update time of the first constellation and the constellation update time of the second constellation is within a preset range, whether to update the second constellation may be further determined based on at least one of the one or more modulation symbols of the first constellation, the variation of the modulation symbol of the first constellation relative to the modulation symbol of the third constellation, or all the modulation symbols output by the constellation modulation mapper corresponding to the first artificial intelligence model, for example, depending on whether the variation is within a preset range. An implementation in which the second device determines, based on the first information, whether to update the second constellation is not limited in embodiments of this application.

Optionally, the second information is response information or acknowledgment information for the first information, or acknowledgment information indicating that the second constellation has been updated.

In an optional implementation, step S101 includes: The first device determines to update the second constellation, and sends the first information. It can be learned that, in this implementation, when determining that the second constellation needs to be updated, the first device may perform steps S101 and S102, to indicate the second device to update the second constellation. For example, when the first device updates channel estimation based on a reference signal and obtains updated second channel environment information, a constellation synchronization mechanism described in steps S01 and S102 may be triggered. Optionally, in this implementation, after receiving the second information and determining that the second constellation is a constellation updated based on the first information, the first device may update the first constellation based on the first information. In this way, the constellation update time of the first constellation in the first information may be time later than time at which the second information is received. Therefore, the first device updates the first constellation after receiving the second information, or does not update the first constellation if the first device does not receive the second information, so that constellation consistency between two ends is implemented as much as possible.

In another optional implementation, the first device receives third information from the second device, where the third information indicates the constellation information of the second constellation and/or the second channel environment information related to the second constellation. The first device determines, based on the third information, whether to update the first constellation. If the first device determines not to update the first constellation, the first device performs step S101. If the first device determines to update the first constellation, the first device updates the first constellation based on the third information, and sends fourth information to the second device, where the fourth information indicates that the first constellation is a constellation updated based on the third information.

It can be learned that, in this implementation, the second device sends the third information to initiate the constellation synchronization mechanism. In this way, the second device serves as a receive end for decoding, and may trigger, by sending the third information, the constellation synchronization mechanism when an error occurs during decoding, or when the second channel environment information is updated based on the reference signal, or when a difference value between updated second channel environment information and the second channel environment information before the update is greater than a preset value, for example, when an initialized constellation is unavailable. The first device may determine, based on the third information, whether to update the first constellation based on the constellation update time and/or measurement time of a channel. For example, if measurement time of the second channel environment information is updated relative to measurement time of the first channel environment information, the first device determines to update the first constellation; otherwise, the first device determines not to update the first constellation. This is not limited in this application.

Optionally, in this implementation, the fourth information is a constellation update notification, and includes the constellation update time. In this way, the first device may update the first constellation at the constellation update time based on the third information.

Optionally, in embodiments of this application, the first information and the third information may be transmitted in a conventional modulation scheme, for example, the QPSK or the QAM described above, or may be transmitted in an agreed modulation scheme. Optionally, the first information and the third information may be respectively downlink control information or uplink control information, and are related to downlink transmission or uplink transmission.

It can be learned that, in the information processing method in embodiments of this application, the first device may send, to the second device by using the first information, constellation information of a constellation used for modulation and/or related channel environment information. In this way, the second device can update, based on the first information, a constellation used for demodulation, so that constellations at a receive end and a transmit end are consistent, to improve a demodulation gain. In addition, both the constellation modulation mapper and the constellation modulation demapper correspond to artificial intelligence models in which channel environment information is additionally input, so that constellations designed based on the artificial intelligence models can change in real time with a scenario. With reference to the information processing method in embodiments of this application, constellations that change in real time with a scenario can be consistent at the transmit end and the receive end, so that the second device can successfully obtain a correct bit through decoding, to eliminate uncertainty in an actual communication system to a maximum extent, for example, including but not limited to channel estimation errors, channel interpolation errors, and channel aging caused by different measurement periodicities, so that the constellation modulation mapper and the constellation modulation demapper can be normally used in the communication system.

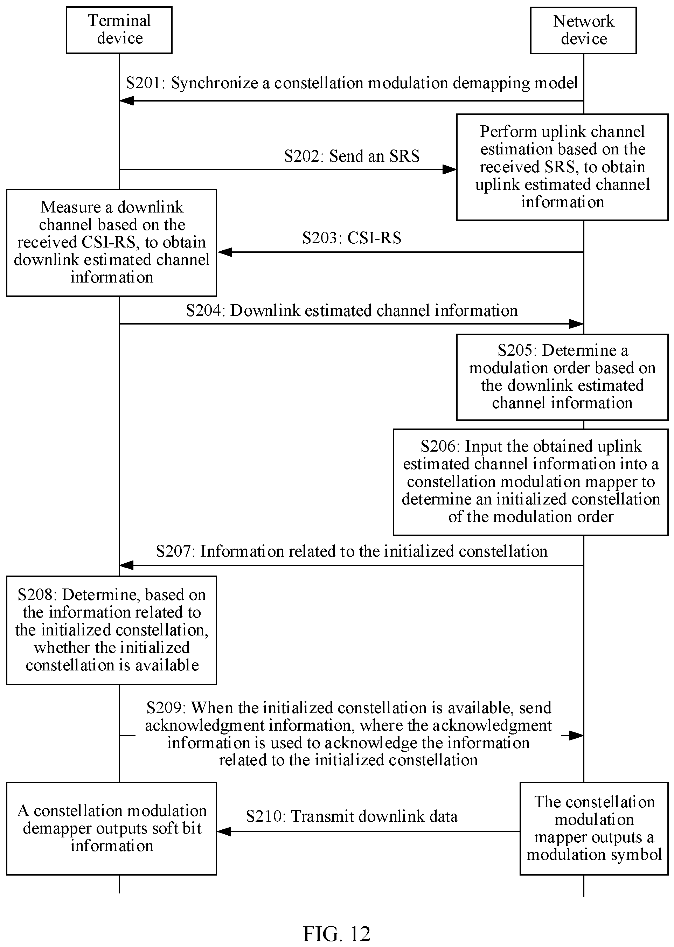

FIG. 12 to FIG. 14 are schematic flowcharts of information processing methods for downlink transmission according to embodiments of this application. FIG. 12 to FIG. 14 are described with reference to the related content in FIG. 9 to FIG. 11 by using an example in which a first device is a network device, a second device is a terminal device, and downlink transmission is performed. In addition, embodiments of this application are further described by using an example in which the terminal device triggers a constellation synchronization mechanism and the network device triggers the constellation synchronization mechanism in an initialization process in a constellation start phase and in a subsequent constellation update process.

The information processing method shown in FIG. 12 may include but is not limited to the following steps.

S201: The network device synchronizes a constellation modulation demapping model with the terminal device.

Optionally, step S201 may be: The network device and the terminal device perform synchronous training to obtain a constellation modulation mapper and a constellation modulation demapper; or one end of the network device or the terminal device performs training to obtain a constellation modulation mapper and a constellation modulation demapper, and then transmits a needed artificial intelligence model to a peer end.

For related descriptions of the constellation modulation mapper and the constellation modulation demapper, refer to the foregoing descriptions. Details are not described herein again.

S202: The terminal device sends an SRS, and correspondingly, the network device performs uplink channel estimation based on the received SRS, to obtain uplink estimated channel information.

S203: The network device sends a CSI-RS, and correspondingly, the terminal device measures a downlink channel based on the received CSI-RS, to obtain downlink estimated channel information.

For content of the uplink estimated channel information and the downlink estimated channel information, refer to the foregoing channel environment information. Details are not described herein again.

Optionally, a sequence of step S202 and step S203 is not limited. The downlink estimated channel information includes but is not limited to CSI and a CQI of the downlink channel.

S204: The terminal device sends the downlink estimated channel information to the network device, and correspondingly, the network device receives the downlink estimated channel information.

S205: The network device determines a modulation order based on the downlink estimated channel information.

Optionally, the network device further determines a bit rate based on the CSI and the CQI.

S206: The network device inputs the obtained uplink estimated channel information into the constellation modulation mapper to determine an initialized constellation of the modulation order.

S207: The network device sends information related to the initialized constellation to the terminal device, and correspondingly, the terminal device receives the information related to the initialized constellation.

The initialized constellation is the first constellation in embodiments in FIG. 11 to FIG. 13. The information related to the initialized constellation includes but is not limited to the foregoing constellation information and/or related channel environment information. For example, the information related to the initialized constellation includes at least one of the following: (1) an estimated channel and a measurement moment of the estimated channel, where the estimated channel may be an uplink channel of one or more REs; (2) a modulation symbol of the initialized constellation, for example, one or more modulation symbols in a 4QAM constellation set (16 constellations); (3) a signal-to-noise ratio of an uplink channel and a measurement moment of the uplink channel; (4) channel delay spread information and a measurement moment of the channel delay spread information; and (5) an output of the constellation modulation mapper. As described above, the output of the constellation modulation mapper is a constellation set. If the information related to the initialized constellation sent by the network device includes the output of the constellation modulation mapper, the group of constellation sets may serve as an additional input of the constellation modulation demapper in the terminal device.

S208: The terminal device determines, based on the information related to the initialized constellation, whether the initialized constellation is available. If the initialized constellation is available, the terminal device performs step S209; or if the initialized constellation is unavailable, the terminal device ends this procedure.

That the terminal device determines, based on the information related to the initialized constellation, whether the initialized constellation is available includes but is not limited to the following two implementations. In an optional implementation, that the terminal device determines, based on the information related to the initialized constellation, whether the initialized constellation is available includes: The terminal device compares the initialized constellation with a terminal device-side constellation, to obtain a constellation difference; and the terminal device determines, based on the constellation difference, whether the initialized constellation is available. The terminal device-side constellation is a constellation determined by the terminal device based on the obtained downlink estimated channel information by using the constellation modulation demapper, and is the second constellation described above. Details are not described herein again.

In another optional implementation, that the terminal device determines, based on the information related to the initialized constellation, whether the initialized constellation is available includes: The terminal device compares measurement time of the downlink estimated channel information with measurement time of the uplink estimated channel information related to the initialized constellation, to determine whether the initialized constellation is available. The downlink estimated channel information is channel environment information related to the initialized constellation.

S209: The terminal device sends acknowledgment information to the network device, and correspondingly, the network device receives the acknowledgment information.

The acknowledgment information is used to acknowledge the information related to the initialized constellation. Optionally, the acknowledgment information includes but is not limited to an identifier of the terminal device and an identifier of a stream. For multi-stream transmission, modulation schemes used for transmission of all streams may be different. Therefore, the acknowledgment information carries the identifier of the stream, and may be used to notify the network device of acknowledgment of a modulation scheme of a stream.

Optionally, when determining that the initialized constellation sent by the network device is available, the terminal device may directly use the information related to the initialized constellation to determine a constellation used for demodulation. For example, the terminal device uses the information related to the initialized constellation as an input of the constellation modulation demapper.

S210: The network device transmits downlink data by using the constellation modulation mapper, and correspondingly, the terminal device receives the downlink data by using the constellation modulation demapper.

Both the constellation modulation mapper and the constellation modulation demapper are the initialized constellation, that is, the constellation modulation mapper outputs a modulation symbol corresponding to a bit, and the constellation modulation demapper outputs corresponding soft bit information, to implement downlink data transmission.

It can be learned that, according to the information processing method shown in FIG. 12, constellation consistency between a receive end and a transmit end can be implemented in an AI constellation start phase, to improve a demodulation gain.

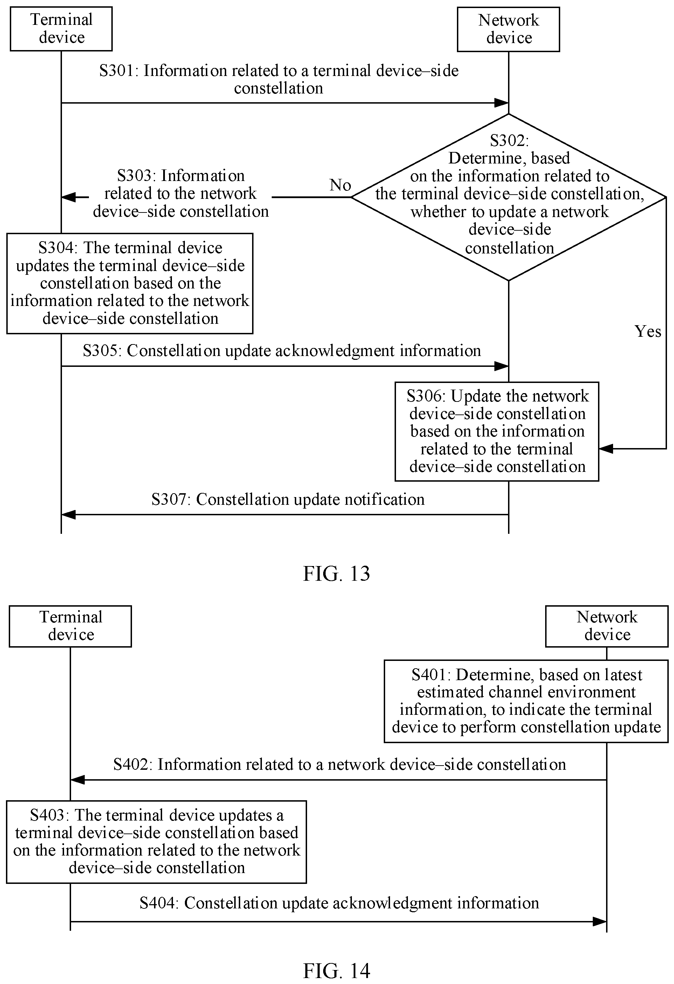

During data transmission, when the terminal device incorrectly decodes data, or determines, based on latest estimated channel environment information, to update a constellation, or when the initialized constellation delivered by the network device in the method in FIG. 12 is unavailable, the terminal device may perform, including but not limited to, the following steps shown in FIG. 13, to perform constellation error correction or a constellation synchronization mechanism.

S301: The terminal device sends information related to a terminal device-side constellation to the network device, and correspondingly, the network device receives the information related to the terminal device-side constellation.

The terminal device-side constellation is the second constellation described above, and the information related to the terminal device-side constellation includes constellation information of the terminal device-side constellation (for example, the constellation information of the second constellation described above) and/or channel environment information related to the terminal device-side constellation (for example, the second channel environment information related to the second constellation described above). The channel environment information related to the terminal device-side constellation is channel environment information that is additionally input to the constellation modulation demapper when a constellation is updated on a terminal device side. For content of the constellation information on the terminal device side and the channel environment information related to the terminal device-side constellation, refer to the constellation information of the second constellation and the second channel environment information described above. The second channel environment information is channel environment information of a downlink channel.

S302: The network device determines, based on the information related to the terminal device-side constellation, whether to update a network device-side constellation. If the network device determines not to update the network device-side constellation, the network device performs step S303; or if the network device determines to update the network device-side constellation, the network device performs step S306.

The network device-side constellation is the first constellation described above, and information related to the network device-side constellation includes constellation information of the network device-side constellation (for example, the constellation information of the first constellation described above) and/or channel environment information related to the network device-side constellation (for example, the first channel environment information related to the first constellation described above). The channel environment information related to the network device-side constellation is channel environment information that is additionally input to the constellation modulation mapper when a constellation is updated on a network device side. For content of the constellation information on the network device side and the channel environment information related to the network device-side constellation, refer to the constellation information of the first constellation and the first channel environment information described above. The first channel environment information is channel environment information of an uplink channel.

An implementation in which the network device determines, based on the information related to the terminal device-side constellation, whether to update the network device-side constellation includes but is not limited to the following two implementations. In an optional implementation, that the network device determines, based on the information related to the terminal device-side constellation, whether to update the network device-side constellation includes: That the network device determines, based on the information related to the terminal device-side constellation, whether to update the network device-side constellation includes: The network device compares the network device-side constellation with the terminal device-side constellation, to obtain a constellation difference; and the network device determines, based on the constellation difference, whether to update the network device-side constellation. In another optional implementation, that the network device determines, based on the information related to the terminal device-side constellation, whether to update the network device-side constellation includes: The network device compares measurement time of downlink estimated channel information with measurement time of uplink estimated channel information related to the terminal device-side constellation, to determine whether to update the network device-side constellation.

S303: The network device sends the information related to the network device-side constellation to the terminal device, and correspondingly, the terminal device receives the information related to the network device-side constellation.

S304: The terminal device updates the terminal device-side constellation based on the information related to the network device-side constellation.

S305: The terminal device sends constellation update acknowledgment information to the network device, and correspondingly, the network device receives the constellation update acknowledgment information.

The constellation update acknowledgment information is an acknowledgment of the information related to the network device-side constellation that is sent by the network device, or indicates that the terminal device-side constellation is a constellation updated based on the information related to the network device-side constellation. In this way, the network device may perform downlink transmission by using the network device-side constellation, and correspondingly, the terminal device may perform downlink reception by using the terminal device-side constellation, and the network device and the terminal device implement constellation consistency.

S306: The network device updates the network device-side constellation based on the information related to the terminal device-side constellation.

S307: The network device sends a constellation update notification to the terminal device, and correspondingly, the terminal device receives the constellation update notification.

The constellation update notification indicates that the network device-side constellation is a constellation updated based on the information related to the terminal device-side constellation. Optionally, the constellation update notification may include constellation update time. The constellation update time is time at which the network device updates the network device-side constellation. The constellation update time may be later than or earlier than step S307.

It can be learned that, in the method in FIG. 13, when the terminal device incorrectly decodes data, or determines, based on latest estimated channel environment information, to update a constellation, or when the initialized constellation delivered by the network device in the method in FIG. 12 is unavailable, the terminal device may perform the steps in this embodiment of this application to perform the constellation error correction or the constellation synchronization mechanism, to improve a decoding gain.

During data transmission, the network device side may also initiate constellation synchronization. For example, when obtaining the latest estimated channel environment information through measurement, the network device may perform, including but not limited to, the following steps shown in FIG. 14 to perform constellation synchronization.

S401: The network device determines, based on the latest estimated channel environment information, to indicate the terminal device to perform constellation update.

S402: The network device sends information related to a network device-side constellation to the terminal device, and correspondingly, the terminal device receives the information related to the network device-side constellation.

The network device-side constellation is the first constellation described above. Correspondingly, the information related to the network device-side constellation includes constellation information of the network device-side constellation and/or the channel environment information latest estimated by the network device, for example, which may be referred to as the first channel environment information. For content of the constellation information and the channel environment information, refer to the foregoing descriptions. Details are not described herein again.

S403: The terminal device updates a terminal device-side constellation based on the information related to the network device-side constellation.

The terminal device-side constellation is the second constellation described above. Details are not described herein again.

S404: The terminal device sends constellation update acknowledgment information to the network device, and correspondingly, the network device receives the constellation update acknowledgment information.

The constellation update acknowledgment information indicates that the terminal device-side constellation is a constellation updated based on the information related to the network device-side constellation. Optionally, the constellation update acknowledgment information may include constellation update time. The constellation update time is time at which the network device updates the network device-side constellation based on the latest estimated channel environment information. The constellation update time may be later than or earlier than time at which the network device receives the constellation update acknowledgment information.

Further, the network device transmits downlink data based on an updated constellation, and correspondingly, the terminal device receives the downlink data based on an updated constellation.

It can be learned that, in the method in FIG. 14, the network device may trigger execution of the steps in this embodiment of this application to perform constellation synchronization and consistency, to improve the decoding gain.

For a case in which the information processing method in FIG. 9 to FIG. 11 is applied to the downlink transmission, descriptions are further provided in FIG. 12 to FIG. 14. For a case in which the information processing method in FIG. 9 to FIG. 11 is applied to uplink transmission, the first device is a terminal device and has the constellation modulation mapper in embodiments of this application. Correspondingly, the second device is a network device and has the constellation modulation demapper in embodiments of this application. Correspondingly, during the uplink transmission, a terminal device-side constellation is the first constellation in FIG. 9 to FIG. 11, and a network device-side constellation is the second constellation in FIG. 9 to FIG. 11. For other content of the uplink transmission, refer to the cases of the downlink transmission in FIG. 12 to FIG. 14, and the information processing method in FIG. 11 to FIG. 13 is adaptively adjusted. Details are not described herein again.

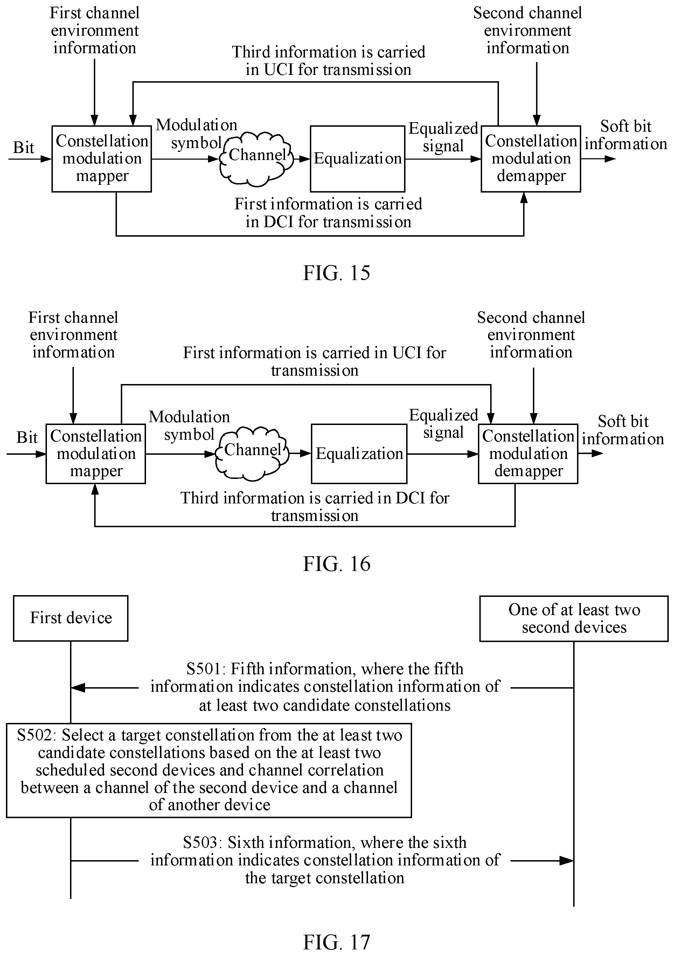

Optionally, in FIG. 9 to FIG. 11, that the second device updates the second constellation based on the first information may include: The second device uses the first information and the second channel environment information as an input of the constellation modulation demapper, so that an output of the constellation modulation demapper or a corresponding constellation set is an updated second constellation. Correspondingly, that the first device updates the first constellation based on the third information includes: The first device uses the third information and the first channel environment information as an input of the constellation modulation mapper, so that a constellation set output by the constellation modulation mapper is an updated first constellation. FIG. 15 and FIG. 16 are respectively two diagrams of data transmission based on a scenario-based constellation design according to embodiments of this application.

FIG. 15 is for downlink transmission. A constellation modulation mapper corresponds to a first artificial intelligence model whose input is a bit, first channel environment information, and third information, and output is a modulation symbol. A constellation modulation demapper corresponds to a second artificial intelligence model whose input is an equalized signal, second channel environment information, and first information, and output is soft bit information. Information related to a constellation transmitted by using DCI is information related to the first constellation. In other words, the first information described above is carried in the DCI for transmission, and is transmitted from a network device having the constellation modulation mapper to a terminal device having the constellation modulation demapper. Correspondingly, information related to a constellation transmitted by using UCI is information related to the second constellation. In other words the third information described above is carried in the UCI for transmission, and is transmitted from the terminal device having the constellation modulation demapper to the network device having the constellation modulation mapper, that is, the network device is a data transmit end, and the terminal device is a data receive end. Optionally, in FIG. 15, because the first information is sent by the network device to the terminal device, and the third information is sent by the terminal device to the network device, the first information may also be referred to as AI constellation control information, and the third information is referred to as AI constellation synchronization information.

FIG. 16 is for uplink transmission. For inputs and outputs that respectively correspond to a constellation modulation mapper and a constellation modulation demapper, refer to FIG. 15. A difference is that, in the uplink transmission, a network device side is an end having the constellation modulation demapper, and a terminal device side is an end having the constellation modulation mapper. Therefore, information related to a constellation transmitted by using DCI is information related to the second constellation. In other words, the third information described above is carried in the DCI for transmission, and is transmitted from a network device having the constellation modulation demapper to a terminal device having the constellation modulation mapper. Correspondingly, information related to a constellation transmitted by using UCI is information related to the first constellation. In other words, the first information described above is carried in the UCI for transmission, and is transmitted from the terminal device having the constellation modulation mapper to the network device having the constellation modulation demapper, that is, the network device is a data receive end, and the terminal device is a data transmit end. Optionally, in FIG. 16, because the third information is sent by the network device to the terminal device, and the first information is sent by the terminal device to the network device, the third information may also be referred to as AI constellation control information, and the first information is referred to as AI constellation synchronization information.

FIG. 17 is a schematic flowchart of another information processing method according to an embodiment of this application. In the information processing method in FIG. 17, a second device may report a plurality of candidate constellations, and a first device selects a corresponding constellation used for demodulation for each second device based on at least two scheduled second devices and channel correlation between channels of the second devices. Specifically, as shown in FIG. 17, the information processing method may include but is not limited to the following steps.

S501: The second device sends fifth information to the first device, and correspondingly, the first device receives the fifth information. The fifth information indicates constellation information of at least two candidate constellations.

Optionally, the fifth information may include information related to the at least two candidate constellations, for example, the constellation information and/or the channel environment information described above. This embodiment of this application is described by using an example in which the second device is one of the at least two second devices scheduled by the first device.

S502: The first device selects a target constellation from the at least two candidate constellations based on the at least two scheduled second devices and channel correlation between a channel of the second device and a channel of another device.

S503: The first device sends sixth information to the second device, and correspondingly, the second device receives the sixth information. The sixth information indicates constellation information of the target constellation.

Optionally, the sixth information may include an identifier of the target constellation.

In a case, the at least two candidate constellations each are a mapping relationship between a bit and a modulation symbol that is generated by the second device by using an artificial intelligence model, and the target constellation is a constellation used by the second device to perform modulation. Optionally, the artificial intelligence model corresponds to a constellation modulation mapper whose input is a bit and output is a modulation symbol, or corresponds to a constellation modulation mapper whose input is the bit and channel environment information and output is the modulation symbol. In another case, the at least two candidate constellations each are a mapping relationship between an equalized signal or a received signal and soft bit information that is generated by the second device by using an artificial intelligence model, and the target constellation is a constellation used by the second device to perform corresponding demodulation. Optionally, the artificial intelligence model corresponds to a constellation modulation demapper that outputs soft bit information for an input equalized signal or received signal, or the artificial intelligence model corresponds to a constellation modulation demapper that outputs the soft bit information for the input equalized signal or received signal and input second channel environment information related to a second constellation.

It can be learned that, in the method described in FIG. 17, the first device may select a constellation for the second device based on scheduled devices and channel correlation, to facilitate improvement of network performance.

Optionally, downlink transmission is used as an example. To be specific, the first device is a network device, and the second device is a terminal device. Before step S501 in FIG. 17, the method may further include content of steps S201 to S205 in FIG. 12. In addition, the network device may further send, to the terminal device, the modulation order determined in step S205, and the terminal device inputs downlink estimated channel information into the constellation modulation demapper to generate at least two candidate constellations of a specified modulation order. Then steps S501 to S503 are performed. The network device transmits downlink data based on a target constellation indicated for each terminal device. Optionally, uplink transmission is used as an example. A constellation used by the terminal device to perform modulation may alternatively be selected by the network device from the at least two candidate constellations. Details are not described herein again.

Optionally, the method for selecting the target constellation from the at least two candidate constellations based on the scheduled devices and the channel correlation between the devices described in FIG. 17 may also be applied to FIG. 9 to FIG. 16 described above. For example, in FIG. 9, for downlink transmission in which the first device is a network device and the second device is a terminal device, the third information may indicate information related to at least two candidate constellations, so that the network device can select a target constellation for the terminal device from the at least two candidate constellations, and indicate the target constellation to the terminal device by using DCI. For another example, in FIG. 9, for uplink transmission in which the first device is a terminal device and the second device is a network device, the first information may indicate information related to at least two candidate constellations, so that the network device can select a target constellation for the terminal device from the at least two candidate constellations, and indicate the target constellation to the terminal device by using DCI.

The foregoing content describes in detail the method provided in this application. To facilitate implementation of the foregoing solutions in embodiments of this application, embodiments of this application further provide a corresponding apparatus or device. The following describes only main steps of the solution. For specific technical details, refer to the foregoing method embodiments.

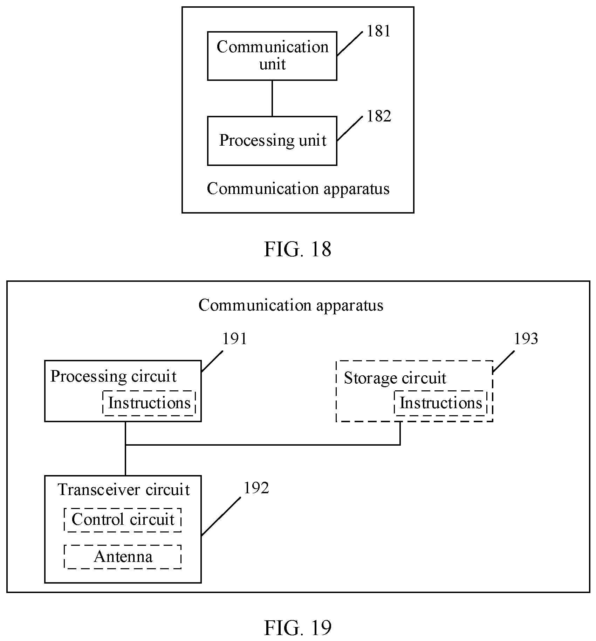

In this application, a communication apparatus is divided into function modules based on the foregoing method embodiments. For example, each function module may be divided to each corresponding function, or two or more functions may be integrated into one processing module. The integrated module may be implemented in a form of hardware, or may be implemented in a form of a software functional module. It should be noted that, in this application, module division is an example, and is merely a logical function division. In actual implementation, another division manner may be used. The following describes in detail the communication apparatus in embodiments of this application with reference to FIG. 18 and FIG. 19.

FIG. 18 is a diagram of a structure of a communication apparatus according to an embodiment of this application. As shown in FIG. 18, the communication apparatus may include a communication unit 181 and a processing unit 182.

In some embodiments of this application, the communication apparatus may be the first device shown above, or a chip or a circuit disposed in the first device. In other words, the communication apparatus may be configured to perform steps, functions, or the like performed by the first device in the foregoing method embodiments.

In a design, the communication unit 181 is configured to send first information, where the first information indicates constellation information of a first constellation and/or first channel environment information related to the first constellation, and the first constellation is a mapping relationship between a bit and a modulation symbol that is determined by using a first artificial intelligence model. The communication unit 181 is further configured to receive second information, where the second information indicates that a second constellation is a constellation updated based on the first information, and the second constellation is a mapping relationship between an equalized signal or a received signal and soft bit information that is determined by using a second artificial intelligence model.

Optionally, in the communication apparatus, the processing unit 182 is configured to determine the first information.

In this embodiment of this application, for a possible implementation of the communication apparatus, further refer to the descriptions of the first device in the method embodiments shown in FIG. 9 to FIG. 16. Details are not described herein again.

It may be understood that specific descriptions of the communication unit and the processing unit shown in this embodiment of this application are merely examples. For specific functions of the communication unit and the processing unit, steps performed by the communication unit and the processing unit, or the like, refer to related functions or steps of the first device in the method embodiments shown in FIG. 9 to FIG. 16. Details are not described herein again. In addition, for technical effects of this embodiment of this application, refer to the technical effects in the method embodiments shown in FIG. 9 to FIG. 16. For brevity, details are not described herein again.

In another design, the communication unit 181 is configured to receive fifth information from a second device, where the fifth information indicates constellation information of at least two candidate constellations. The processing unit 182 is configured to select a target constellation from the at least two candidate constellations based on at least two scheduled second devices and channel correlation between channels of the second devices. The communication unit 181 is further configured to send sixth information to the second device, where the sixth information indicates constellation information of the target constellation.

In this embodiment of this application, for a possible implementation of the communication apparatus, further refer to the descriptions of the first device in the method embodiment shown in FIG. 17. Details are not described herein again.

It may be understood that specific descriptions of the communication unit and the processing unit shown in this embodiment of this application are merely examples. For specific functions of the communication unit and the processing unit, steps performed by the communication unit and the processing unit, or the like, refer to related functions or steps of the first device in the method embodiment shown in FIG. 17. Details are not described herein again. In addition, for technical effects of this embodiment of this application, refer to the technical effects in the method embodiment shown in FIG. 17. For brevity, details are not described herein again.

Still refer to FIG. 18. In some other embodiments of this application, the communication apparatus may be the second device shown above, or a chip or a circuit disposed in the second device. In other words, the communication apparatus may be configured to perform steps, functions, or the like performed by the second device in the foregoing method embodiments.

In a design, the communication unit 181 is configured to receive first information from a first device, where the first information indicates constellation information of a first constellation and/or first channel environment information related to the first constellation, and the first constellation is, in the first device, a mapping relationship between a bit and a modulation symbol that is determined by using a first artificial intelligence model. The communication unit 181 is further configured to send second information to the first device, where the second information indicates that a second constellation is a constellation updated based on the first information, and the second constellation is, in the second device, a mapping relationship between an equalized signal or a received signal and soft bit information that is determined by using a second artificial intelligence model.

Optionally, in the communication apparatus, the processing unit 182 is further configured to update the second constellation based on the first information.

In another design, the processing unit 182 is configured to update the second constellation based on second channel environment information by using the second artificial intelligence model. The communication unit 181 is configured to send third information to the first device, where the third information indicates constellation information and/or the second channel environment information of the second constellation.

In this embodiment of this application, for a possible implementation of the communication apparatus, further refer to the descriptions of the second device in the method embodiments shown in FIG. 9 to FIG. 16. Details are not described herein again. It may be understood that specific descriptions of the communication unit and the processing unit shown in this embodiment of this application are merely examples. For specific functions of the communication unit and the processing unit, steps performed by the communication unit and the processing unit, or the like, refer to related functions or steps of the second device in the method embodiments shown in FIG. 9 to FIG. 16. Details are not described herein again. In addition, for technical effects of this embodiment of this application, refer to the technical effects in the method embodiments shown in FIG. 9 to FIG. 16. For brevity, details are not described herein again.

In still another design, the communication unit 181 is configured to send fifth information to the first device, where the fifth information indicates constellation information of at least two candidate constellations. The communication unit 181 is further configured to receive sixth information, where the sixth information indicates constellation information of a target constellation, and the target constellation is a candidate constellation selected from a plurality of candidate constellations.

In this embodiment of this application, for a possible implementation of the communication apparatus, further refer to the descriptions of the second device in the method embodiment shown in FIG. 17. Details are not described herein again. It may be understood that specific descriptions of the communication unit and the processing unit shown in this embodiment of this application are merely examples. For specific functions of the communication unit and the processing unit, steps performed by the communication unit and the processing unit, or the like, refer to related functions or steps of the second device in the method embodiment shown in FIG. 17. Details are not described herein again. In addition, for technical effects of this embodiment of this application, refer to the technical effects in the method embodiment shown in FIG. 17. For brevity, details are not described herein again.

The foregoing describes the communication apparatus in embodiments of this application, and the following describes a possible product form of the communication apparatus. It should be understood that a product in any form that has a function of the communication apparatus in FIG. 18 falls within the protection scope of embodiments of this application. It should be further understood that the following descriptions are merely examples, and do not limit a product form of the communication apparatus in embodiments of this application.

In a possible implementation, in the communication apparatus shown in FIG. 18, the processing unit 182 may be one or more processing circuits; and the communication unit 181 may be a transceiver circuit, or the communication unit 181 may be a sending unit and a receiving unit, where the sending unit may be a transmitter circuit, and the receiving unit may be a receiver circuit. The sending unit and the receiving unit are integrated into one component, for example, a transceiver circuit. In this embodiment of this application, the processing circuit and the transceiver circuit may be coupled, or may be connected in another manner. A manner of connecting the processing circuit and the transceiver circuit is not limited in embodiments of this application. In a process of performing the foregoing method, a process of sending information in the foregoing method may be understood as a process of outputting the information by the processing circuit. When outputting the information, the processing circuit outputs the information to the transceiver circuit, so that the transceiver circuit transmits the information. After the information is output by the processing circuit, other processing may further need to be performed on the information before the information arrives at the transceiver circuit. Similarly, a process of receiving information in the foregoing method may be understood as a process of receiving the input information by the processing circuit. When the processing circuit receives the input information, the transceiver circuit receives the information, and inputs the information into the processing circuit. Further, after the transceiver circuit receives the information, other processing may need to be performed on the information before the information is input into the processing circuit.

FIG. 19 is a diagram of another structure of a communication apparatus according to an embodiment of this application. As shown in FIG. 19, the communication apparatus provided in this embodiment of this application may be configured to implement the method described in the foregoing method embodiments. For details, refer to the descriptions in the foregoing method embodiments. The communication apparatus may be a first communication apparatus, a second communication apparatus, or a chip in the first communication apparatus or the second communication apparatus. For example, the communication apparatus includes one or more processing circuits 191 and a transceiver circuit 192. The communication apparatus may further include a storage circuit 193. In an implementation, the communication apparatus further includes an input/output apparatus (for example, a touchscreen, a display, or a keyboard that is mainly configured to receive data input by a user and output data to the user and that is not shown in the figure).

The processing circuit 191 is mainly configured to process a communication protocol and communication data, control the entire communication apparatus, execute a software program, and process data of the software program. The storage circuit 193 is mainly configured to store the software program and data. The transceiver circuit 192 may include a control circuit and an antenna. The control circuit is mainly configured to perform conversion between a baseband signal and a radio frequency signal and process the radio frequency signal. The antenna is mainly configured to receive and send a radio frequency signal in a form of an electromagnetic wave.

After the communication apparatus is powered on, the processing circuit 191 may read the software program in the storage circuit 193, interpret and execute instructions of the software program, and process the data of the software program. When data needs to be sent in a wireless manner, the processing circuit 191 performs baseband processing on the to-be-sent data, and then outputs a baseband signal to a radio frequency circuit. The radio frequency circuit performs radio frequency processing on the baseband signal, and then sends a radio frequency signal to the outside in a form of an electromagnetic wave through the antenna. When data is sent to the communication apparatus, the radio frequency circuit receives a radio frequency signal through the antenna, converts the radio frequency signal into a baseband signal, and outputs the baseband signal to the processing circuit 191. The processing circuit 191 converts the baseband signal into data, and processes the data.

In another implementation, the radio frequency circuit and the antenna may be disposed independent of the processing circuit that performs baseband processing. For example, in a distributed scenario, the radio frequency circuit and the antenna may be remotely disposed independent of the communication apparatus.

The processing circuit 191, the transceiver circuit 192, and the storage circuit 193 may be connected through a communication bus.

In an example, when a first device uses the form shown in FIG. 19, the processing circuit 191 in FIG. 19 may invoke computer-executable instructions stored in the storage circuit 193, so that the communication apparatus performs the method performed by the first device in any one of the embodiments in FIG. 9 to FIG. 17.

In an example, when a second device uses the form shown in FIG. 19, the processing circuit 191 in FIG. 19 may invoke computer-executable instructions stored in the storage circuit 193, so that the communication apparatus performs the method performed by the second device in any one of the embodiments in FIG. 9 to FIG. 17.

An embodiment of this application further provides a communication system. The system may include at least one first device and at least one second device in FIG. 9 to FIG. 17. For details, refer to the foregoing method embodiments.

In any one of the foregoing implementations, the transceiver circuit 192 may include a transceiver or an interface circuit configured to implement receiving and sending functions. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing implementations, the processing circuit 191 may be included in a processor, the processor may store instructions, and the instructions may be a computer program. The computer program is run on the processing circuit 191, to cause the communication apparatus to perform the methods described in the foregoing method embodiments. The computer program may be solidified in the processing circuit 191. In this case, the processing circuit 191 may be implemented by hardware.

The processing circuit and the transceiver circuit described in this application may be included in a chip, for example, implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), or an electronic device. The processing circuit and the transceiver circuit may alternatively be manufactured by using various IC process technologies, for example, a complementary metal oxide semiconductor (complementary metal oxide semiconductor, CMOS), an N-channel metal oxide semiconductor (N-channel Metal-oxide-semiconductor, NMOS), a positive metal oxide semiconductor (positive channel metal oxide semiconductor, PMOS), a bipolar junction transistor (bipolar junction transistor, BJT), a bipolar CMOS (BiCMOS), silicon germanium (SiGe), or gallium arsenide (GaAs).

It may be understood that the communication apparatus described in embodiments of this application may alternatively have more components and the like than those in FIG. 19. This is not limited in embodiments of this application. The foregoing method performed by the processing circuit and the transceiver circuit is merely an example. For specific steps performed by the processing circuit and the transceiver circuit, refer to the descriptions in the foregoing method embodiments.

In another possible implementation, in the communication apparatus shown in FIG. 18, the processing unit 182 may be one or more logic circuits or processing circuits, and the communication unit 181 may be an input/output interface, also referred to as a communication interface, an interface circuit, an interface, or the like. Alternatively, the communication unit 181 may be a sending unit and a receiving unit. The sending unit may be an output interface, and the receiving unit may be an input interface. The sending unit and the receiving unit are integrated into one unit, for example, an input/output interface.

In addition, this application further provides a computer program. The computer program is for implementing the operation and/or processing performed by the first device in the method provided in this application.

This application further provides a computer program. The computer program is for implementing the operation and/or processing performed by the second device in the method provided in this application.

This application further provides a computer-readable storage medium. The computer-readable storage medium stores computer code. When the computer code runs on a computer, the computer is caused to perform operations and/or processing performed by the first device in the method provided in this application.

This application further provides a computer-readable storage medium. The computer-readable storage medium stores computer code. When the computer code runs on a computer, the computer is caused to perform operations and/or processing performed by the second device in the method provided in this application.

This application further provides a computer program product. The computer program product includes computer code or a computer program. When the computer code or the computer program is run on a computer, operations and/or processing performed by the first device in the method provided in this application are performed.

This application further provides a computer program product. The computer program product includes computer code or a computer program. When the computer code or the computer program is run on a computer, operations and/or processing performed by the second device in the method provided in this application are performed.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces and indirect couplings or communication connections between apparatuses or units, and may be in electrical, mechanical, or other forms.

The units described as separate parts may or may not be physically separate, and parts displayed as units may or may not be physical units, may be located in one position, or may be distributed on a plurality of network units. Some or all of the units may be selected based on an actual requirement to implement the technical effects of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes a plurality of instructions for instructing a computer device (which may be a personal computer, a server, or a network device) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information processing method, wherein the method comprises:
sending first information, wherein the first information indicates constellation information of a first constellation and/or first channel environment information related to the first constellation, and the first constellation is a mapping relationship between a bit and a modulation symbol that is determined by using a first artificial intelligence model; and
receiving second information, wherein the second information indicates that a second constellation is a constellation updated based on the first information, and the second constellation is a mapping relationship between an equalized signal or a received signal and soft bit information that is determined by using a second artificial intelligence model.

2. The method according to claim 1, wherein
the first artificial intelligence model corresponds to a constellation modulation mapper that outputs a modulation symbol for an input bit and the input first channel environment information; and
the second artificial intelligence model corresponds to a constellation modulation demapper that outputs soft bit information for an input equalized signal or received signal and input second channel environment information related to the second constellation.

3. The method according to claim 1 or 2, wherein the constellation information of the first constellation comprises constellation update time of the first constellation, and further comprises at least one of the following:
one or more modulation symbols of the first constellation;
a variation of a modulation symbol of the first constellation relative to a modulation symbol of a third constellation, wherein the third constellation is a mapping relationship between the bit and the modulation symbol that is most recently updated before the update time of the first constellation; or
all modulation symbols output by the constellation modulation mapper corresponding to the first artificial intelligence model.

4. The method according to any one of claims 1 to 3, wherein the first channel environment information comprises measurement time of an uplink channel, and further comprises at least one of a channel measurement result or channel delay spread information of the uplink channel; or
the first channel environment information comprises measurement time of a downlink channel, and further comprises at least one of a channel measurement result or channel delay spread information of the uplink channel.

5. The method according to any one of claims 1 to 4, wherein sending the first information comprises:
determining to indicate to update the second constellation; and
sending the first information.

6. The method according to any one of claims 1 to 4, wherein the method further comprises:
receiving third information, wherein the third information indicates constellation information of the second constellation and/or the second channel environment information related to the second constellation; and
when determining, based on the third information, not to update the first constellation, performing the step of sending the first information.

7. The method according to claim 6, wherein the method further comprises:
when determining, based on the third information, to update the first constellation, updating the first constellation based on the third information, and sending fourth information, wherein the fourth information indicates that the first constellation is a constellation updated based on the third information.

8. The method according to claim 6 or 7, wherein the constellation information of the second constellation comprises constellation update time of the second constellation, and further comprises at least one of the following:
one or more modulation symbols of the second constellation;
a variation of a modulation symbol of the second constellation relative to a modulation symbol of a fourth constellation, wherein the fourth constellation is, in the second device, a mapping relationship between the equalized signal or the received signal and the soft bit information that is most recently updated before the update time of the second constellation; or
all modulation symbols of the constellation modulation demapper corresponding to the second artificial intelligence model.

9. The method according to any one of claims 6 to 8, wherein the second channel environment information comprises measurement time of a downlink channel, and further comprises at least one of a channel measurement result or channel delay spread information of the downlink channel; or
the second channel environment information comprises measurement time of an uplink channel, and further comprises at least one of a channel measurement result or channel delay spread information of the uplink channel.

10. An information processing method, wherein the method comprises:
receiving first information, wherein the first information indicates constellation information of a first constellation and/or first channel environment information related to the first constellation, and the first constellation is a mapping relationship between a bit and a modulation symbol that is determined by using a first artificial intelligence model; and
sending second information, wherein the second information indicates that a second constellation is a constellation updated based on the first information, and the second constellation is a mapping relationship between an equalized signal or a received signal and soft bit information that is determined by using a second artificial intelligence model.

11. The method according to claim 10, wherein
the first artificial intelligence model corresponds to a constellation modulation mapper that outputs a modulation symbol for an input bit and the input first channel environment information; and
the second artificial intelligence model corresponds to a constellation modulation demapper that outputs soft bit information for an input equalized signal or received signal and input second channel environment information related to the second constellation.

12. An information processing method, wherein the method comprises:
updating a second constellation based on second channel environment information by using a second artificial intelligence model; and
sending third information, wherein the third information indicates constellation information of the second constellation and/or the second channel environment information.

13. The method according to claim 12, wherein the method further comprises:
receiving fourth information, wherein the fourth information indicates that a first constellation is a constellation updated based on the third information, and the first constellation is a mapping relationship between a bit and a modulation symbol that is determined by using a first artificial intelligence model.

14. The method according to claim 12, wherein the method further comprises:
receiving first information, wherein the first information indicates constellation information of a first constellation and/or first channel environment information related to the first constellation, and
the first constellation is, in the first device, a mapping relationship between a bit and a modulation symbol that is determined by using a first artificial intelligence model; and
updating the second constellation based on the first information, and sending second information, wherein the second information indicates that the second constellation is a constellation updated based on the first information.

15. The method according to any one of claims 12 to 14, wherein
the first artificial intelligence model corresponds to a constellation modulation mapper that outputs a modulation symbol for an input bit and the input first channel environment information; and
the second artificial intelligence model corresponds to a constellation modulation demapper that outputs soft bit information for an input equalized signal or received signal and the input second channel environment information related to the second constellation.

16. A communication apparatus, comprising a module or a unit configured to perform the method according to any one of claims 1 to 15.

17. A communication apparatus, comprising a processing circuit and a transceiver circuit, wherein the transceiver circuit is configured to receive a signal from another communication apparatus and transmit the signal to the processing circuit, or send a signal from the processing circuit to another communication apparatus; and the processing circuit is configured to implement the method according to any one of claims 1 to 15 by using a logic circuit or by executing code instructions.

18. A communication system, comprising an apparatus configured to perform the method according to any one of claims 1 to 5 and an apparatus configured to perform the method according to claim 10 or 11; or
an apparatus configured to perform the method according to any one of claims 6 to 9, and an apparatus configured to perform the method according to any one of claims 12 to 15.

19. A computer-readable storage medium, wherein the computer-readable storage medium stores a computer program, and when the computer program is run, a computer device is caused to implement the method according to any one of claims 1 to 15 by using a transceiver and a processor.
